(19) Europäisches Patentamt / European Patent Office / Office européen des brevets

(11) **EP 3 676 794 B1**

(12) **EUROPEAN PATENT SPECIFICATION**

(45) Date of publication and mention
of the grant of the patent:
**23.04.2025 Bulletin 2025/17**

(21) Application number: **18756474.5**

(22) Date of filing: **29.08.2018**

(51) International Patent Classification (IPC):
**G06T 3/00** (2024.01)    **G06T 3/04** (2024.01)
**G06T 3/40** (2024.01)    **G02B 27/01** (2006.01)
**H04N 13/30** (2018.01)    **A63F 13/212** (2014.01)
**A63F 13/5255** (2014.01)

(52) Cooperative Patent Classification (CPC):
**G06T 3/40; A63F 13/212; A63F 13/5255;
G06T 3/04;** A63F 2300/8082; G02B 27/017;
G06T 2207/10004; G06T 2207/10016

(86) International application number:
**PCT/EP2018/073169**

(87) International publication number:
**WO 2019/043025 (07.03.2019 Gazette 2019/10)**

(54) **ZOOMING AN OMNIDIRECTIONAL IMAGE OR VIDEO**

ZOOMEN EINER OMNIDIREKTIONALEN BILD- ODER VIDEODATEI

ZOOM SUR UNE IMAGE OU UNE VIDÉO OMNIDIRECTIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.08.2017 EP 17188233**

(43) Date of publication of application:
**08.07.2020 Bulletin 2020/28**

(73) Proprietors:
• **Koninklijke KPN N.V.**
**3072 AP Rotterdam (NL)**
• **Nederlandse Organisatie voor
Toegepast-Natuurwetenschappelijk Onderzoek
TNO**
**2595 DA 's-Gravenhage (NL)**

(72) Inventors:
• **VAN DEVENTER, Mattijs, Oskar**
**2264 DL Leidschendam (NL)**
• **HINDRIKS, Hendrikus, Nathaniël**
**2526 BL The Hague (NL)**
• **KOENEN, Robert**
**3071 AW Rotterdam (NL)**

(74) Representative: **De Vries & Metman
Overschiestraat 180
1062 XK Amsterdam (NL)**

(56) References cited:
• **HUIWEN CHANG ET AL: "Panning and Zooming
High-Resolution Panoramas in Virtual Reality
Devices", PROCEEDINGS OF THE 30TH ANNUAL
ACM SYMPOSIUM ON USER INTERFACE
SOFTWARE AND TECHNOLOGY , UIST '17, 21
August 2017 (2017-08-21), New York, New York,
USA, pages 279 - 288, XP055421218, ISBN:
978-1-4503-4981-9, Retrieved from the Internet
<URL:http://gfx.cs.princeton.edu/pubs/
Chang_2017_PAZ/uist2017.pdf> [retrieved on
20171102], DOI: 10.1145/3126594.3126617**
• **PAPADOPOULOS CHARILAOS ET AL: "Acuity-
Driven Gigapixel Visualization", IEEE
TRANSACTIONS ON VISUALIZATION AND
COMPUTER GRAPHICS, IEEE SERVICE
CENTER, LOS ALAMITOS, CA, US, vol. 19, no.
12, 1 December 2013 (2013-12-01), pages 2886 -
2895, XP011529702, ISSN: 1077-2626, [retrieved
on 20131016], DOI: 10.1109/TVCG.2013.127**

• JOHANNES KOPF ET AL: "Capturing and viewing gigapixel images", ACM TRANSACTIONS ON GRAPHICS (TOG), ACM, US, vol. 26, no. 3, 29 July 2007 (2007-07-29), pages 93 - es, XP058336150, ISSN: 0730-0301, DOI: 10.1145/1276377.1276494

• ANDY COCKBURN ET AL: "A review of overview+detail, zooming, and focus+context interfaces", ACM COMPUTING SURVEYS, vol. 41, no. 1, 1 December 2008 (2008-12-01), pages 1 - 31, XP058023499, ISSN: 0360-0300, DOI: 10.1145/1456650.1456652

**Description**

**FIELD OF THE INVENTION**

The invention relates to a method of zooming an omnidirectional image or video which is represented by image data and is viewable in virtual or augmented reality on the basis of the image data being i) projected onto a virtual body in a virtual environment and ii) rendered from a viewpoint within or facing the virtual body.

The invention further relates to a computer program comprising instructions for causing a processor system to perform the method.

The invention further relates to a rendering system configured for rendering the virtual environment, and to a sender system configured for providing image data of an omnidirectional image or video to the rendering system.

**BACKGROUND ART**

Virtual Reality (VR) involves the use of computer technology to simulate a user's physical presence in a virtual environment, while Augmented Reality (AR) uses computer technology to augment a user's view of the physical real-world environment by overlaying a virtual environment over, or in another manner combining the virtual environment with the user's view of the physical real-world environment.

These environments may be rendered by VR or AR rendering systems or devices, and displayed to the user using VR or AR displays, including but not limited to Head-Mounted Displays (HMD), holographic displays and curved or other types of displays providing an immersive experience to the user, including but not limited large-screen or multi-screen displays such as CAVE or IMAX cinema displays.

It is known to display an omnidirectional image or video in such a virtual environment. Here, the term 'omnidirectional' may refer to the image or video providing an immersive experience when displayed using a VR or AR display, e.g., by matching or exceeding the field-of-view of such a display. A specific example is that the omnidirectional image or video may provide an at least 180 degree view of a scene. The omnidirectional image or video may even provide a larger view of the scene, e.g., up to 360 degrees, thereby providing an even more immersive experience to the user.

Generally, rendering an omnidirectional image or video in a virtual or augmented environment involves projecting the image data of the omnidirectional image or video onto a virtual body, such as a sphere, and rendering the projected image data from a viewpoint within or facing the virtual body.

For example, a 360° video is usually created by stitching multiple images together, e.g., two 180° images captured using fisheye lenses. When a 360° video is to be rendered, the video images are typically mapped onto a virtual body, which may be a sphere, a box or other geometrical primitive or shape. Having done so, the projected image data may be rendered from a viewpoint within or facing the virtual body.

It may be desirable to enable a user, e.g., a viewer, or a content creator, e.g., a director, to zoom an omnidirectional image or video when it is displayed in a virtual environment. For example, zooming-in may allow a user to temporarily view a detailed part of a high-resolution 360° video which may otherwise be difficult to perceive. In general, various reasons may exist for zooming an omnidirectional image or video, including but not limited to:

    1. When the omnidirectional video or image has a higher resolution than can be displayed to the user, and/or when the user's visual acuity is insufficient to perceive certain detail, zooming may be used to provide an enlarged view, e.g.,

        a. When the omnidirectional video shows a football match, a user may want to zoom-in to have a better view of a duel between players.
        b. A surgeon who is remotely performing surgery on the basis of a live feed of the patient which is provided in the form of an omnidirectional video may want to inspect a suture more closely to ensure that it has been applied correctly.
        c. During a live-stream of an E-sports match by omnidirectional video, the user's viewpoint may position him/her above the playing field, but a more detailed view of the arrangement of units may be desired to determine the strategy of a player.
        d. A security guard who is guarding a gate by monitoring an omnidirectional video feed from a security camera may notice something odd in the pockets of a visitor and may wish to take a closer look.

    2. A content creator, such as a director, may wish to focus the attention of the viewer to a certain region in the omnidirectional video, and may draw attention by introducing a zoomed-in version of the region in the omnidirectional video, e.g.,

        a. In the distance, the hero of a movie may be approaching on his horse. The directory may employ a zooming transformation to improve the hero's visibility as well as ensuring that the viewer's attention is drawn to the approaching hero.

b. In a fighting scene between two martial artists, the director may overlay both artists with a zooming lens, which exaggerates the speed at which they move closer. When they clash together during the fight, both lenses may merge into one, whereby the viewer's attention may be transferred to the point of impact.

In real-time computer graphics, e.g., in 3D gaming, it is known to provide a zoomed-in view of a region by reducing the virtual Field-Of-View (FOV) of the virtual camera representing the user's viewpoint in the virtual environment, e.g., by adjusting the so-termed projection matrix. Another approach is to move the virtual camera closer towards an object of interest in the virtual environment. Being closer allows for a smaller portion of the object of interest to fill the screen, thereby allowing for more detail to be displayed. When using this approach, special care needs to be taken to prevent clipping issues and unnatural rotation which would allow the user to notice that he/she is in a virtual environment and consequently break the immersion. Another disadvantage of this approach is that the perspective of an omnidirectional image or video, which may be shown in the virtual environment, does not change when the camera is moved, which will typically appear unnatural to the user.

YouTube allows users to view omnidirectional video using a HMD. At the time of first filing, YouTube offered zoom-in functionality, by which a user's previous non-zoomed view is replaced by a zoomed-in view of the omnidirectional video.

A disadvantage of this type of zooming is that the user may lose his/her original reference point and experience a change in view which does not match his/her physical movement. It is known from "Minimizing cyber sickness in head mounted display systems: design guidelines and applications" by Porcino et al., IEEE 5th International Conference on Serious Games and Applications for Health, 2017, that this type of incongruence is likely to cause or contribute to nausea of the user. Disadvantageously, in the zoomed-in view, the regular rotation of the head is amplified by the zoom factor, resulting in unnatural movement, which, when combined with the loss of reference points at the edge of the field-of-view, will likely contribute to the nausea of the user. Porcino et al. also note that, in general, (virtual) camera movement which is not initiated by the user will likely be uncomfortable for the user.

Huiwen Chang ET AL: "Panning and Zooming High-Resolution Panoramas in Virtual Reality Devices", Proceedings of the 30th Annual ACM Symposium on User Interface Software and Technology, UIST '17, 21 August 2017 (2017-08-21), pages 279-288, XP055421218, New York, USA, https://qfx.cs.princeton.edu/pubs/Chang_2017_PAZ/uist2017.pdf , introduces and tests new interface modalities for exploring high resolution panoramic imagery in VR. It is demonstrated that limiting the visual FOV of the zoomed in imagery to the central portion of the visual field, and modulating the transparency or zoom level of the imagery during rapid panning, reduce simulator sickness and help with targeting tasks.

Papadopoulos Charilaos ET AL: "Acuity-Driven Gigapixel Visualization", IEEE Transactions on Visualization and Computer Graphics, IEEE Service Center, Los Alamitos, CA, US, vol. 19, no. 12, 1 December 2013 (2013-12-01), pages 2886-2895, XP011529702, presents a framework for acuity-driven visualization of super-high resolution image data on gigapixel displays. Tiled display walls offer a large workspace that can be navigated physically by the user. Based on head tracking information, the physical characteristics of the tiled display and the formulation of visual acuity, an out-of-core gigapixel rendering scheme is guided by delivering high levels of detail only in places where it is perceivable to the user. This principle is applied to gigapixel image rendering through adaptive level of detail selection. Additionally, an acuity-driven tessellation scheme is developed for high-quality Focus-and-Context (F+C) lenses that significantly reduces visual artifacts while accurately capturing the underlying lens function.

Johannes KOPF ET AL: "Capturing and viewing gigapixel images", ACM Transactions On Graphics (TOG), ACM, US, vol. 26, no. 3, 29 July 2007 (2007-07-29), pages 1-10, XP058336150, presents a system to capture and view "Gigapixel images": very high resolution, high dynamic range, and wide angle imagery consisting of several billion pixels each. A specialized camera mount, in combination with an automated pipeline for alignment, exposure compensation, and stitching, provide the means to acquire Gigapixel images with a standard camera and lens. The viewer enables exploration of such images at interactive rates over a network, while dynamically and smoothly interpolating the projection between perspective and curved projections, and simultaneously modifying the tone-mapping to ensure an optimal view of the portion of the scene being viewed.

## SUMMARY OF THE INVENTION

It would be advantageous to enable zooming an omnidirectional image or video which is less likely to cause or contribute to nausea of the user.

In accordance with a first aspect of the invention a method according to claim 1 is provided.

In accordance with a further aspect of the invention according to claim 9, a transitory or non-transitory computer-readable medium is provided comprising a computer program. The computer program comprises instructions for causing a processor system to perform the method.

In accordance with a further aspect of the invention according to claim 10, a rendering system is provided.

In accordance with a further aspect of the invention according to claim 16, a sender system is provided.

The above measures involve providing zooming functionality for an omnidirectional video or image. Such omnidirectional video or image may be displayed to a user by the image data being projected within a virtual environment onto a virtual body, such as a sphere, and the virtual environment being rendered from a viewpoint within or facing the virtual body. As a result, a rendered image may be obtained which may then be displayed to the user. Typically, the rendering is performed on a periodic basis and the viewpoint is that of a virtual camera in the virtual environment which represents the viewpoint of the user. The viewing direction of the virtual camera may be adjusted in response to a head rotation of the user. In case the user wears an HMD, such head rotation may be measured by a sensor in the HMD, but various other techniques exist as well for, in general, measuring the viewing direction of a user. It will be appreciated that the functionality described in this paragraph is known per se.

Instead of replacing the user's previous non-zoomed view of the omnidirectional video or image in its entirety with a zoomed view, the above measures provides as output a rendered image which comprises a zoomed portion which provides a zoomed view of the region, and a non-zoomed portion shown simultaneously with the zoomed portion. For example, an area bordering the zoomed region is shown, which includes but is not limited to the periphery of the zoomed region. In case zooming-in functionality is provided, the zoomed-in portion is a center portion of the rendered image, and the non-zoomed portion is a periphery around the center portion in the rendered image. In case zooming-out functionality is provided, the non-zoomed portion may be the center portion and the zoomed-out portion may be the periphery around the center portion.

The above measures have the effect that, when the zooming functionality is invoked, a portion of the user's previous non-zoomed view may remain visible. This may ensure that the user does not experience the zooming as a change in viewpoint and consequently experience a mismatch with his/her physical (non-)movement. Rather, the zoomed-in view may be considered by the user as an addition to, rather than a replacement of, the previous non-zoomed view. Another advantage may be that the non-zoomed view remains congruent with the head rotation of the user, in that the regular rotation of the head may not be amplified by the zoom factor here.

In an embodiment, the zoomed-in portion may have a static position in the virtual environment. The zoomed-in portion may thus move out-of-view in response to head rotation, instead of maintaining a fixed position in the user's view. This may further reduce nausea, as the zoomed-in portion may be less considered to represent the user's view but will be more considered to be a feature or attribute which is provided within the virtual environment. In an alternative embodiment, the zoomed-in portion may rather have a static position within the field-of-view which is rendered. As such, the zoomed-in portion may be provided at a same position in the rendered image(s), irrespective of the viewing direction of the user.

In an embodiment, a gradual transition may be provided between the zoomed portion and the non-zoomed portion. For example, the zooming may be provided by a warping or distortion of the image data which is modulated in strength, e.g., a larger zoom factor in the center of the zoomed portion than at the edge of the zoomed portion. This may allow the user to recognize the relation between image data shown in the zoomed portion and image data shown in the non-zoomed portion.

In an embodiment, providing the zoomed view of the region may comprise processing the image data before the image data is projected onto the virtual body, or adjusting said projection of the image data, to establish the zoomed view of the region on a surface of the virtual body. The zoomed-view may be provided on the surface of the virtual body, e.g., by pre-processing the image data or by adjusting the projection thereof onto the virtual body. For the latter, use may be made by techniques described in the co-pending application *<Programmable Projection Metadata>* . This embodiment may have as advantage that it is not needed to adjust the virtual environment, the virtual body nor the rendering. As such, zooming functionality may be provided for rendering systems in which it is not possible nor desired to adjust the virtual environment, the virtual body or the rendering. In particular, the pre-processing of the image data may be performed by the sender system or other system, in which case it may not be needed for the rendering system to perform any specific operations for providing the zooming functionality.

In an embodiment, providing the zoomed view of the region may comprise deforming or adapting the virtual body to position a part of the virtual body closer to or further away from the viewpoint. For example, said deforming may comprise indenting a surface of the virtual body towards or away from the viewpoint. Such indenting may establish the zooming functionality in an efficient manner, e.g., without having to separately process the image data. Indentation of a virtual body may be easy to achieve. For example, if the virtual body is represented by a mesh, indentation may be obtained by known mesh deformation techniques. In addition, if the indentation slopes from a zero indentation to a maximum, a gradual transition may be automatically established between the zoomed portion and the non-zoomed portion.

In an embodiment, providing the zoomed view of the region may comprise redirecting light in the virtual environment to establish the zoomed view of the region during the rendering. For example, a light redirecting object may be provided in the virtual environment, such as a lens, or a virtual display. Such a 'virtual' object may establish the zooming functionality in an efficient manner, e.g., without having to separately process the image data. For example, engines providing virtual environments, including but not limited to gaming engines, may allow defining virtual objects having the desired light redirecting properties.

The method further comprises obtaining user input, and selecting the region to be zoomed, or adjusting a parameter of said zooming, based on the user input. In a related embodiment, the rendering system may comprise a user input interface configured for obtaining user input, e.g., from a user input device. The processor of the rendering system is configured for selecting the region to be zoomed, or adjusting a parameter of said zooming, based on the user input. The zooming functionality may thereby be controllable by the user, e.g., the viewer.

The obtaining the user input comprises obtaining a measurement from a head-tracking system which is indicative of a translational and/or rotational movement of a head of the user. Head-tracking systems are known per se, and may, using sensors such as image sensors, accelerometers, gyroscopes, etc., provide measurements indicative of the position and/or movement of the user's head. Examples of movement-related measurements include measurements of velocity and acceleration. The zooming functionality is controlled by the head movement or head rotation of the user. For example, the zoom factor may be selected (inversely) proportional to the amount of head movement of the user. For example, when the rotational movement is absent or below a threshold, this may indicate that the user focuses on a particular region of the omnidirectional video or image, and the zoom factor may be gradually adjusted. Conversely, in case the rotational movement is above a threshold, the zoom factor may be reduced and/or zooming may be disabled to reduce or prevent nausea. Similarly, controlling the zooming functionality comprises selecting the size of the zoom region inversely proportional to the amount of head movement or acceleration of the user. For example, the zoom region may decrease when the user moves or accelerates his head so the user experiences a larger non-zoomed region to reduce or prevent nausea. Again, above a certain threshold, the zoom region may be switched to zero or effectively disabled. The head-tracking system may be comprised partially or completely in a head-mounted display. The head-tracking system may also be separate from a head-mounted display, e.g., based on one or more cameras or sensors tracking the head movement.

In an embodiment, obtaining the user input may comprise detecting a gaze of a user to identify a gaze point of the user with respect the rendered image. The gaze point may be used to determine of which region the zoomed-in view is to be provided. Also other aspects of the zooming may be controlled by gaze. For example, the zooming functionality may be invoked in response to a steady gaze. Also, the zoom factor may be gradually increased while the gaze is held steady. Alternatively or additionally, the zoom region may be gradually increased while the gaze is held steady.

In an embodiment, in addition to being controlled by measurements, the zooming functionality may be based on user settings. For example, the gradual increase of zoom factor or zoom region size in response to head movement may be capped or enhanced based on user settings or technical limits. Also the speed of change such as the speed of increase may be determined by user settings, e.g., to optimize for the user's susceptibility to nausea.

In an embodiment, the image data may be obtained by layered video comprising a base layer and a zoom layer, wherein the zoom layer may provide an equal or higher resolution representation of the region to be zoomed than the base layer, wherein providing the zoomed portion of the rendered image may comprise selecting image data from the zoom layer and wherein providing the non-zoomed portion may comprise selecting image data from the base layer.

In an embodiment, the image data interface of the rendering system may be a network interface configured for receiving the image data via a network from a sender system, wherein the processor may be configured to provide the zoomed view of the region by signalling the sender system via the communication interface to process the image data so as to establish the zoomed view of the region in the image data before the image data is transmitted to the rendering system.

It will be appreciated by those skilled in the art that two or more of the above-mentioned embodiments, implementations, and/or aspects of the invention may be combined in any way deemed useful.

Modifications and variations of any one of both systems, the method and the computer programs which correspond to the described modifications and variations of another one of both systems, the method and the computer program, may be carried out by a person skilled in the art on the basis of the present description.

It will be appreciated that the embodiments above are applicable to both monoscopic (e.g. a television screen) and stereoscopic viewing (e.g. a VR-headset). In the latter case, the stereoscopic images seen by the user may be different for each eye. This may create a 3D-effect, which may allow the user to look to the sides of the zoomed area.

The invention is set out in the appended set of claims.

## BRIEF DESCRIPTION OF THE DRAWINGS

These and other aspects of the invention are apparent from and will be elucidated with reference to the embodiments described hereinafter. In the drawings,

Fig. 1 shows a sender system providing image data of an omnidirectional scene to a rendering system via a network, with the rendering system rendering and displaying the omnidirectional scene on a head-mounted display;
Fig. 2 shows an example of an omnidirectional scene which may be streamed by tiled-streaming to the rendering system, while showing a current field-of-view of the rendering system and a region therein which is to be zoomed;
Fig. 3 shows a rendered image, which may be displayed by the head-mounted display, comprising a zoomed-in portion and a non-zoomed portion;

Fig. 4 provides an overview of the sender system;

Fig. 5 provides an overview of the rendering system;

Fig. 6 shows a grid illustrating a 'bulging' zoomed-in view;

Fig. 7 shows a grid illustrating a 'bulging' zoomed-out view

Fig. 8 shows a grid illustrating a sphere-shaped zoomed-in view;

Fig. 9 shows a grid illustrating a disc-shaped zoomed-in view;

Fig. 10 shows a grid illustrating a complex-shaped zoomed-in view;

Fig. 11 shows a grid illustrating another complex-shaped zoomed-in view;

Fig. 12 illustrates providing a fallback layer and a zoom layer by adaptive streaming while illustrating a contents of the adaptive streaming descriptor;

Fig. 13 illustrates the zoom layer providing image data in a magnified area of a viewport, and the fallback layer providing image data of a non-magnified area;

Fig. 14 shows the zoom level being controlled as a function of the rotational velocity of a user's head, for example while wearing a head-mounted display;

Fig. 15 illustrates providing a zoomed view by sphere deformation;

Fig. 16 illustrates providing a zoomed view by image data processing; and

Fig. 17 shows an exemplary data processing system.

It should be noted that items which have the same reference numbers in different figures, have the same structural features and the same functions, or are the same signals. Where the function and/or structure of such an item has been explained, there is no necessity for repeated explanation thereof in the detailed description.

**List of reference and abbreviations**

The following list of references and abbreviations is provided for facilitating the interpretation of the drawings and shall not be construed as limiting the claims.

100 sender system
110 network interface
112 image data
114 signalling data
120 processor
130 storage
150 network
200 rendering system
210 network interface
212 signalling data
220 processor
230 display output
232 display data
240 head-mounted display
250 user
300 tiled representation of omnidirectional image
310 tiles representing field of view of display
320 region to be zoomed
330 rendered image
340 zoomed portion
350 non-zoomed portion
400 grid illustrating 'bulging' zoomed-in view
410 grid illustrating 'bulging' zoomed-out view
420 grid illustrating sphere-shaped zoomed-in view
430 grid illustrating disc-shaped zoomed-in view
440 grid illustrating complex-shaped zoomed-in view
450 grid illustrating complex-shaped zoomed-in view
500 adaptive streaming descriptor
502 entry for fallback layer
504 entry for zoom layer

510HTTP server
512fallback layer
514zoom layer
520viewport
522non-zoomed area
524zoomed area
600velocity in deg/s
602zoom level
610linear control function
620logarithmic control function
630polynomial control function
700director
710unprocessed omnidirectional video file
715region of interest
720magnification transformation
730magnification transformation applicator
740magnification transform enriched omnidirectional video file
742processed omnidirectional video file
745processed region of interest
750medium
760omnidirectional video viewer
762conventional omnidirectional video viewer
770viewing scene as virtual environment
775viewing sphere as virtual body
780magnifying viewing scene
785magnifying viewing sphere
790rendered processed omnidirectional video
795user
1000 exemplary data processing system
1002 processor
1004 memory element
1006 system bus
1008 local memory
1010 bulk storage device
1012 input device
1014 output device
1016 network adapter
1018 application

## DETAILED DESCRIPTION OF EMBODIMENTS

The following embodiments involve or relate to providing zooming functionality for an omnidirectional video or image. Such omnidirectional video or image may be displayed by the image data being projected onto a virtual body, such as a sphere, and the virtual environment being rendered from a viewpoint within or facing the virtual body. As a result, a rendered image may be obtained which may then be displayed to the user using a display, such as a head-mounted display (HMD).

In general, the virtual environment may be an environment in which the virtual body is defined, e.g., as a geometric object in three-dimensional (3D) space, and which may, but does not need to, comprise other virtual objects. Here, the term 'virtual' is used to indicate that the objects are not physical objects but rather defined by data. For example, in case the virtual environment is used for telecommunication purposes, the virtual environment may comprise avatars of users participating in a communication session. The virtual environment may also be a representation of a physical real-world environment. The virtual environment may also be registered with the physical real-world environment to display objects contained therein in an augmented manner, e.g., as overlays, with the user's view of the real-world environment.

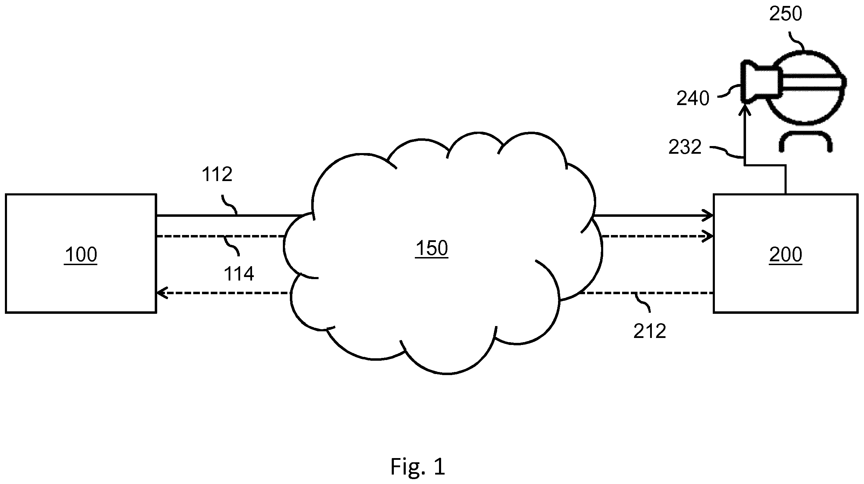

In some embodiments, the rendering may be performed by a rendering system, and the image data may be provided to the rendering system by streaming via a network. Fig. 1 provides a general overview of such an embodiment. Here, a sender system 100 is shown which may be configured for providing image data 112 of the omnidirectional video or image to a rendering system 200 via a network 150.

Fig. 1 further shows the rendering system 200 providing the rendered image(s) in the form of display data 232 to a HMD 240 which may be worn by a user 250 and connected to the rendering system. Fig. 1 further illustrates signalling between the sender system 100 and the rendering system 200, e.g., by way of the sender system 100 providing signalling data 114 to the rendering system 200 and the rendering system providing signalling data 212 to the sender system. Such signalling may be carried out in some embodiments and will be described further onwards.

Streaming an omnidirectional video or image is known per se. For example, a 360° video is typically created by stitching multiple video images together, e.g., two 180° video images captured using fisheye lenses. Here, the term 'video image' refers to the image being of a video, e.g., a video frame. The stitching may be performed at the sender side, e.g., by the sender system 100 or another system. As a result, the image data 112 which is transmitted may represent the entire omnidirectional video image. Alternatively, only those parts of the omnidirectional video or image may be transmitted that are currently visible to a user of the rendering system, possibly including the image data of a so-termed 'guard-band' around the visible parts.

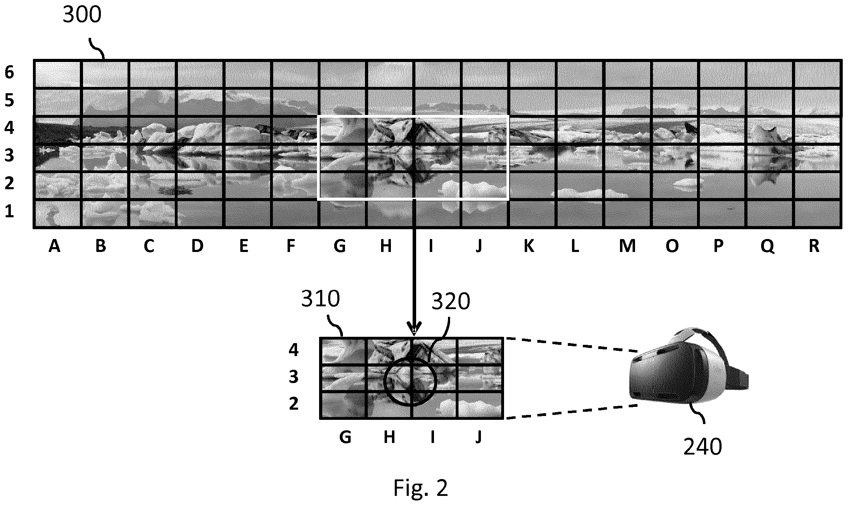

Fig. 2 shows an example of the latter type of transmission by showing an omnidirectional video image 300, which may be spatially segmented into a plurality of tiles, e.g., as indicated by the gridlines forming a two-dimensional array (A-R, 1-7). Each tile may be represented by a different video stream. When the user changes viewing angle, e.g., by rotating his/her head with the head-mounted display 240, the rendering system may determine that another video stream is needed (henceforth also simply referred to as 'new' video stream) and switch to the new video stream by requesting the new video stream from the sender system. In the example of Fig. 2, the field of view of the HMD 240 may encompass several tiles 310 at a time. As such, several video streams may be streamed concurrently to the rendering system.

In general, it may be desirable to provide zooming functionality with respect to an omnidirectional video, whether or not it is streamed and in which form. For example, a user may wish to obtain a zoomed-in view of a region 320 which is located in the current field of view of the user, e.g., as currently displayed by the HMD 240.

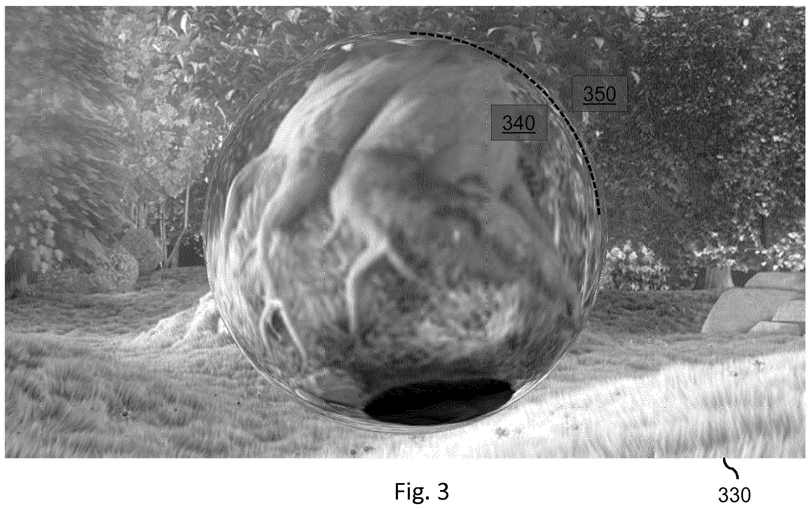

Fig. 3 shows a rendered image 330, which may be obtained after image data of the omnidirectional video is projected onto a virtual body, e.g., a sphere, and rendered from a viewpoint within or facing the virtual body. Such rendering is known per se in the field of virtual reality. The rendered image 330 may be displayed by the head-mounted display, and is shown to provide a zoomed-in view of a region by comprising, in addition to a non-zoomed portion 350, a zoomed-in portion 340 which provides the zoomed view of the region. Here, the term 'non-zoomed' may refer to a presentation which is obtained when the zooming functionality is not invoked, e.g., a default view, or a view having a lower zoom factor than the zoomed-in view.

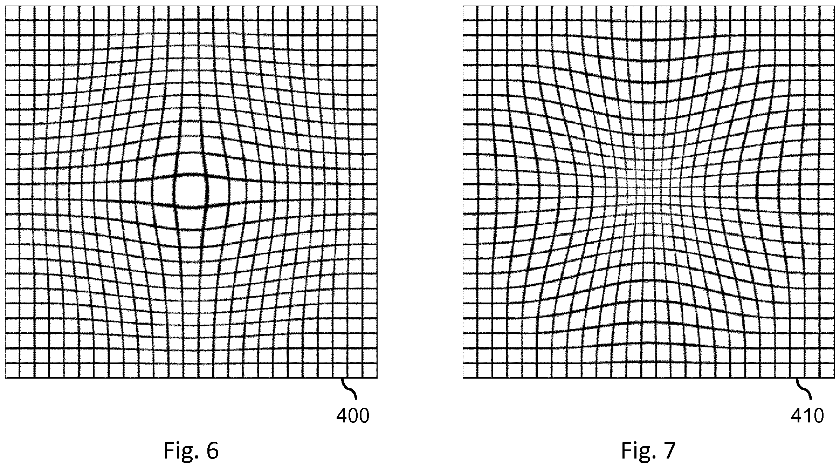

The region to be zoomed may be selected in various ways, e.g., automatically or by user selection. Also, the zooming functionality may be implemented in various ways, e.g., by deforming the image data before or during projection onto the virtual body, by deforming or adjusting the virtual body, etc. Various different examples and embodiments are described with reference to Fig. 6 and onwards.

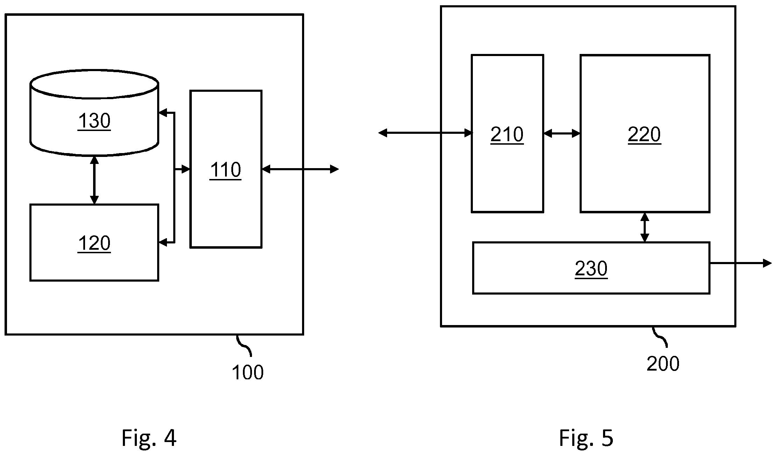

Fig. 4 shows a more detailed view of the sender system 100 previously shown in Fig. 1. It can be seen that the sender system 100 may comprise a network interface 110 for communicating with the rendering system 200 via one or more networks. The network interface 110 may take any suitable form, including but not limited to a wireless network interface, e.g., based on Wi-Fi, Bluetooth, ZigBee, 4G mobile communication or 5G mobile communication, or a wired network interface, e.g., based on Ethernet or optical fiber. The network interface 110 may be a local area network (LAN) network interface but also a network interface to a wide area network (WAN), e.g., the Internet. Fig. 4 further shows the sender system 100 comprising a storage 130, such as internal memory, a hard disk, a solid state drive, or an array thereof, which may comprise the image data of the omnidirectional image or video and from which the image data may be retrieved to be provided to the rendering system 200. Alternatively, the image data may be retrieved by the sender system 100 from a different source, e.g., from an external storage connected to the sender system 100.

The sender system 100 may further comprise a processor 120 which may be configured, e.g., by hardware design or software, to perform the operations described with reference to Fig. 1 and others in as far as pertaining to the providing of the image data of the omnidirectional image or video to the rendering system 200, and in some embodiments, to the enabling of zooming of the omnidirectional image or video within the virtual environment. For example, the processor 120 may be embodied by a single Central Processing Unit (CPU), but also by a combination or system of such CPUs and/or other types of processing units.

The sender system 100 may be embodied by a (single) device or apparatus. For example, the sender system 100 may be embodied as a network server. The sender system 100 may also be embodied by a distributed system of such devices or apparatuses. An example of the latter may be the functionality of the sender system 100 being distributed over different network elements in a network.

Fig. 5 shows a more detailed view of the rendering system 200. It can be seen that the rendering system 200 may comprise a network interface 210 for receiving data from the sender system 100, such as the image data and the signalling data as described with reference to Fig. 1, via one or more networks. The network interface 210 may also be used for sending data to the sender system 100 via the network(s), such as the signalling data as described with reference to Fig. 1. The network interface 210 may take any suitable form, including but not limited to those described with reference to the network interface 110 of the sender system 100 of Fig. 4.

The rendering system 200 may further comprise a processor 220 which may be configured, e.g., by hardware design or software, to perform the operations described with reference to Fig. 1 and others in as far as pertaining to the projecting of the image data onto a virtual body, and the rendering of the image data. In the latter context, the term 'rendering' may refer to generating an image or a video based on a geometric description and texture data of the virtual environment. The projected image data may represent such texture data. The use of other rendering techniques is also conceived. The processor 220 may be embodied by a single Central Processing Unit (CPU) or a single Graphics Processing Unit (GPU), but also by a combination or system of such CPUs and/or GPUs and/or other types of processing units.

Fig. 5 further shows the rendering system 200 comprising a display interface 230, e.g., to display the rendered image(s) on a display (not shown in Fig. 5). The display may be an external display or an internal display of the rendering system 200, and in general may be head mounted or non-head mounted. Examples of the former include the HTC Vive, Oculus Rift, GearVR and PlayStation VR virtual reality headsets and augmented reality headsets such as Microsoft HoloLens and Google Glass. An example of the latter category is a holographic display or CAVE.

The rendering system 200 itself may be a smartphone, personal computer, laptop, tablet device, gaming console, set-top box, television, monitor, projector, smart watch, smart glasses, media player, media recorder, etc.

In general, the sender system 100 of Fig. 4 and the rendering system 200 of Fig. 5 may each be embodied as, or in, a device or apparatus. The device or apparatus may comprise one or more (micro)processors which execute appropriate software. The processors of either system may be embodied by one or more of these (micro)processors. Software implementing the functionality of either system may have been downloaded and/or stored in a corresponding memory or memories, e.g., in volatile memory such as RAM or in non-volatile memory such as Flash. Alternatively, the processors of either system may be implemented in the device or apparatus in the form of programmable logic, e.g., as a Field-Programmable Gate Array (FPGA). Any input and/or output interfaces may be implemented by respective interfaces of the device or apparatus, such as a network interface. In general, each unit of either system may be implemented in the form of a circuit. It is noted that either system may also be implemented in a distributed manner, e.g., involving different devices.

Fig. 6-11 illustrate various ways of providing a zoomed view of a region of interest, which are illustrated by means of a grid 400-450 which is representative of how the zoomed view is established. Here, the grid is originally regular spaced having a spacing still visible at its periphery, with deviations from this regular spacing represent the zooming. It is noted that the zooming in accordance with the shown grids 400-450 may be obtained in various ways, e.g., by deforming the image data before or during projection onto the virtual body, by deforming or adjusting the virtual body, etc. These techniques will also be discussed further onwards in the present specification.

It will be appreciated that the relative size and location of the deformations in the grid (i.e. of the zoomed view), is only illustrative. For example, the zoomed view may be smaller and/or may be placed off-center or even at an edge. Also, the zoomed view may not be static, but form, size and location may change and may be dependent on any one or more of the application (e.g., surgery), an object in the scene (e.g., the size of an object moving in a scene), user input (e.g., user gaze), user settings etc.

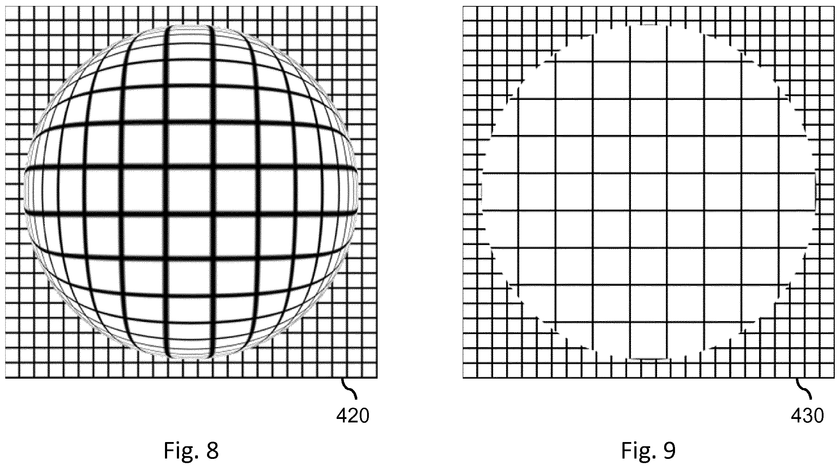

Figs 6-8 each show the zoomed view being provided by a continuous deformation of the grid, whereas Figs. 9-11 each show the zoomed view being provided by discontinuous deformation. Such continuous deformations may be obtained by, or may result in, a 'warping' of image data without occluding other image data. For example, Fig. 6 shows a grid 400 illustrating a 'bulging' zoomed-in view, Fig. 7 shows a grid 410 illustrating a 'bulging' zoomed-out view and Fig. 8 shows a grid 420 illustrating a sphere-shaped zoomed-in view. The latter may result in a rendered image resembling the Balcony painting by M.C. Escher, or as previously shown in Fig. 3.

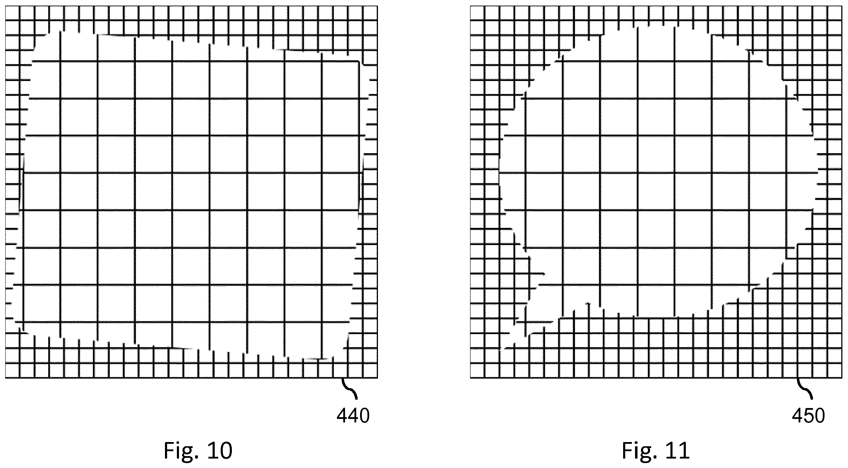

Fig. 9 shows a grid 430 illustrating a disc-shaped zoomed-in view, which unlike Fig. 6-8, does occlude some of the non-zoomed image data. In general, the zoomed-in view does not have to be circular or sphere-shaped. For example, Fig. 10 illustrates a grid 440 illustrating a zoomed-in view in the form of a slightly rotated rounded rectangle, whereas Fig. 11 illustrates a grid 450 illustrating a zoomed-in view in the form of a speech bubble. Various other shapes are equally conceivable.

In general, providing the zoomed view of the region may comprise processing the image data before the image data is projected onto the virtual body, or adjusting the projection of the image data. Both establish the zoomed view of the region on a surface of the virtual body. For example, any known image warping technique may be used to suitably process the image data, including but not limited to landmark-based and mesh-based techniques. In the processing, known interpolation techniques may be used, such as polynomial interpolation and spline interpolation.

With respect to the projection, it is noted that such a projection may involve a coordinate mapping from the typically rectangular coordinates of the image data to a coordinate system associated with the virtual body. For example, if the virtual body is a sphere and associated with a spherical coordinate system, the coordinate mapping may map coordinates from the rectangular coordinate system of the image data to the spherical coordinate system, or vice versa. The coordinate mapping thus may involve projecting the image data onto a surface of the virtual body or vice versa depending on which coordinate system is used as input. The coordinate mapping may be suitable adjusted to provide the desired zooming functionally, e.g., using techniques as described in the co-pending application *<Programmable Projection Metadata>* .

Additionally or alternatively, the zoomed view of the region may be provided by deforming or adapting the virtual body to position a part of the virtual body closer to or further away from the viewpoint. For example, the surface of the virtual body may be indented towards or away from the viewpoint. Yet another possibility is to provide a virtual object in the virtual environment which establishes the zoomed view of the region during the rendering. For example, the virtual object may be a light redirecting object such as a lens, or a virtual display.

In the following, specific embodiments are described incorporating one or more of the abovementioned techniques. It will be appreciated that other combinations are well within reach of the skilled person on the basis of the present disclosure.

It is noted that in the following, the region to be zoomed may be specified by reference to a 'magnification object' which may have a size, a shape, a location, etc., and thereby characterize desired zooming, but which may be implemented in various ways, including ways which do not involve the use of an actual magnification 'object', such as a virtual object in the virtual environment. For example, the image data may be deformed by image warping. Any reference to 'magnification object' is thus, unless otherwise noted, to be understood as merely characterizing the desired zoomed view and to include any suitable implementation of the zooming functionality.

**Two-layer adaptive streaming**

The context of this embodiment is that the image data may be provided from the sender system to the rendering system by layered video streaming of a base layer and a zoom layer. For this purpose, so-termed 'adaptive streaming' techniques may be used. The zoom layer may provide a higher resolution representation of the region to be zoomed than the base layer. Providing the zoomed portion of the rendered image may comprise selecting image data from the zoom layer and providing the non-zoomed portion may comprise selecting image data from the base layer.

In this embodiment, a MPEG-DASH media descriptor file may be provided as indicated in the table below. The file represents a modification of [1].

```
1 <MPD xmins="urn:mpeg:DASH:schema:MPD:2011" mediaPresentationDuration="PT0H3M1.63S" minBufferTime="PT1.5S" profiles="urn:mpeg:dash:profile:isoff-on-demand:2011"
2 type="static">
3 <Period duration="PT0H3M1.63S" start="PT0S">
4 <AdaptationSet>
5 <ContentComponent contentType="video" id="1" />
6 <Representation bandwidth="4190760" codecs="avc1.640028" height="1080" id="1" mimeType="video/mp4" width="1920">
7 <BaseURL>car-20120827-89.mp4</BaseURL>
8 <SegmentBase indexRange="674-1149">
9 <Initialization range="0-673" />
10 </SegmentBase>
11 </Representation>
12 <Representation bandwidth="100000" codecs="avc1.4d4015" height="144" id="5" mimeType="video/mp4" width="256">
13 <BaseURL>car-20120827-160.mp4</BaseURL>
14 <SegmentBase indexRange="671-1146">
15 <Initialization range="0-670" />
16 </SegmentBase>
17 </Representation>
18 </AdaptationSet>
19 <AdaptationSet>
20 <ContentComponent contentType="audio" id="2" />
21 <Representation bandwidth="255236" codecs="mp4a.40.2" id="7" mimeType="audio/mp4" numChannels="2" sampleRate="44100">
22 <BaseURL>car-20120827-8d.mp4</BaseURL>
23 <SegmentBase indexRange="592-851">
24 <Initialization range="0-591" />
25 </SegmentBase>
26 </Representation>
27 </AdaptationSet>
```

28 </Period>
29 <u></MPD></u>

This media descriptor file, which may in the context of MPEG-DASH also be referred to as Media Presentation Description (MPD) and in general as an 'Adaptive Streaming Descriptor', may define a single audio stream and two video streams of two different qualities, but with the same resolution (the latter is not required, but useful to keep the explanation concise). The video with the lowest quality may serve as the base layer (which is also referred to as 'fallback layer'), whereas the video with a higher quality may be used as a zoom layer (also referred to as 'zoom quality layer').

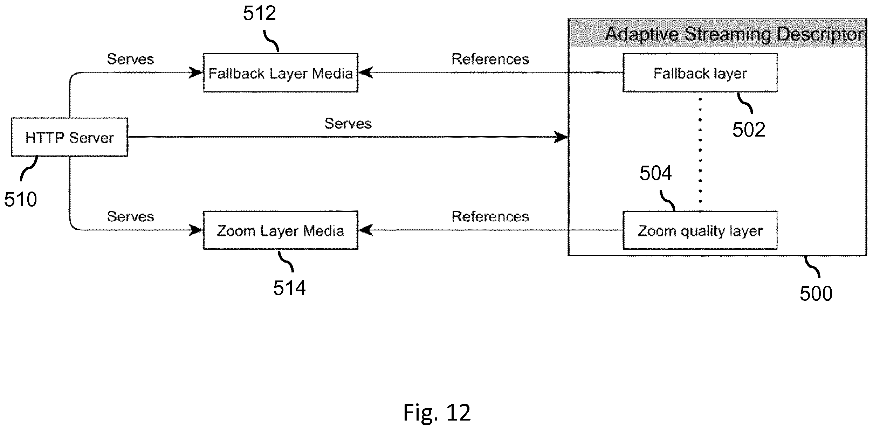

Fig. 12 schematically illustrates the distribution of layers: an adaptive streaming descriptor 500, e.g., the MPD, is shown to comprise a first entry 502 for the fallback layer and a second entry 504 for the zoom quality layer. The former entry may refer to media of the fallback layer, e.g., a first stream 512, as provided by a media source 510, whereas the latter entry may refer to media of the zoom quality layer, e.g., a second stream 514, as provided by the media source 510. By way of example, the media source 510 is shown in Fig. 12 to be an HTTP server. In some embodiments, the media source 510 may represent the sender system 100 as described with Fig. 1.

It is noted that the MPD defines a segment range, but for the sake of concise explanation, reference is only made to the layers. It is also assumed that a MPEG-DASH player will take care of stream synchronization. For example, the reference implementation 'dash.js' [2] of an MPEG-DASH player provides this functionality.

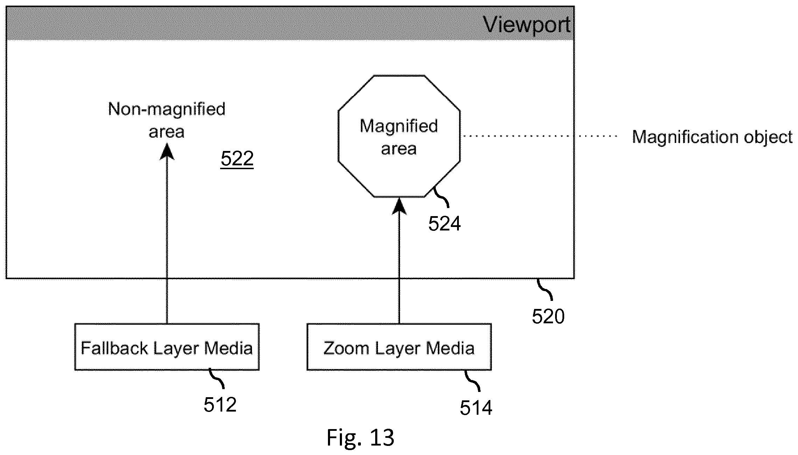

The following considers the rendering system playing out the omnidirectional video described with the aforementioned MPD file, while referring to Fig. 13. The rendering system may implement an omnidirectional video player as a web-application using the dash.js player [2], combined with the video sphere implementation provided by A-Frame [3]. This web-application may also define a magnification object providing a magnified area 524, which may be controlled by the user, e.g., using motion controllers. For example, by pointing, the user may be able adjust the rotation and the position of the magnification object and thus area 524.

During play-out, the image data of the fallback layer 512 may be shown on the video sphere, providing a non-magnified area 522 in the viewport 520 shown to the user. In order to show the zoom layer 514, the angular location of the magnification object 524 may be determined with respect to the video sphere. Based on the determined angular location and, e.g., specifications of the viewing frustum, the bounds of the magnification area 524, e.g. the part of the video which will be displayed on the magnification object, may be determined. As a result, a bounding box may be determined. The part of the zoom layer 514 which is within the bounding box may be cropped and used as a texture for the magnification object 524. Since in this example the resolution of both media layers is the same, no further adjustments are necessary.

**Encoder-implemented zoom**

The zooming functionality may be implemented by the rendering system, but also by another entity, such as the sender system. The rendering system may signal this entity to activate and/or configure the zooming, e.g., via the signalling data 212 shown in Fig. 1. This embodiment describes the use of such signaling to signal an encoder to implement the zooming functionality, which may, but does not need to be, part of the sender system 100 as described with reference to Figs. 1, 5 and others.

In this embodiment, it is assumed that the omnidirectional video is represented by a single high-resolution media file. The resolution may be so high that details may need to be magnified in order to see them using current-gen HMDs.

The rendering system may signal the encoder, e.g., using the aforementioned signalling data 212 of Fig. 1, to introduce a magnification object within a certain time range in the video, e.g., from $t_1 = 60000$ until $t_2 = 360000$ (timestamps in ms from the start of the video). The shape of the magnification object may be specified, e.g., a hemisphere. The size of magnification object may be specified, e.g., a radius of 90% of the (horizontal or vertical, whichever is the smallest) field-of-view of the HMD. It may be specified that the magnification object is to be placed at angles $\varphi = 0$, $\phi = \frac{1}{8}\pi$ with respect to the center of the video sphere containing the 360° video. Also the zoom factor may be specified by ways of the signalling, e.g., 2x zoom-in.

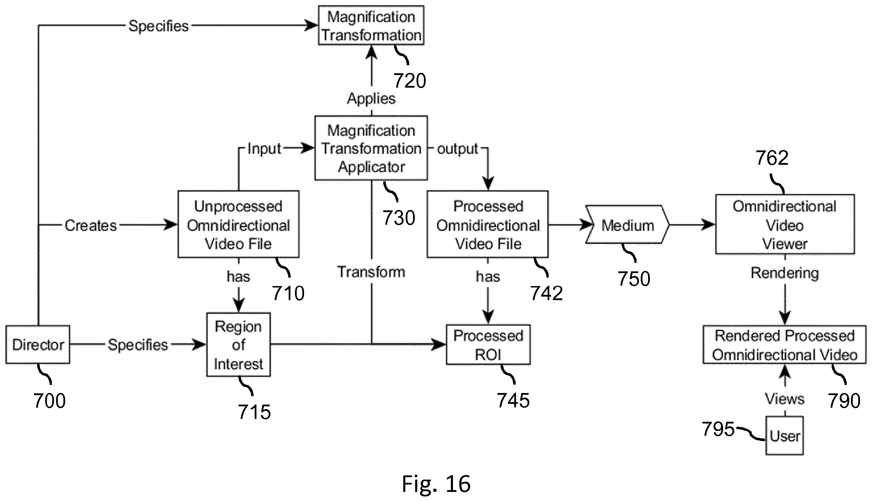

Based on the signaled information, the zooming functionality may be implemented by the encoder, e.g., by warping the image data so as to achieve the desired zooming effect of the magnification object. Fig. 16 shows an example of how the encoder may warp the image data accordingly. As a result, the encoder may provide encoded video data which comprises a zoomed region at the predetermined location. If viewed using, e.g., an HMD, the user may freely look around while the zoomed region stays at the predetermined location in the omnidirectional video.

**User-controlled zoom**

In some embodiments, the user may be enabled to provide user input for selecting the region to be zoomed, or adjusting a parameter of said zooming. An example of the latter is the zoom level. Yet another example is the type of zoom, which may involve selecting between the types described with reference to Figs. 6-11. Yet another example is the size of the zoom region.

When considering the example of the user controlling the level of zooming, this may be implemented in a number of ways. For example, the user may control the zoom level by pressing buttons on a device, interacting with onscreen elements (e.g. sliders, input boxes) within a user-interface, or by speech commands.

The zooming, however, may be limited to a particular range or a set of zoom levels, e.g., by the entity implementing the zooming, or by the user interface with which the user is enabled to select the zoom level. For example, a discrete set of zoom levels may be provided, e.g., 0.1x, 0.5x, 1x, 2x, 4x, 10x, 41x magnification. Another example is that a continuous interval may be provided with an upper and a lower bound, e.g., zoom between 1x and 41x. Yet another example is that a continuous interval may be provided having an infinite upper bound, e.g. zoom from 1x and up.

When the user is operating a device which is able to provide rotational velocity and/or acceleration measurements, such as a HMD, a smartphone or a tablet, these measurements may also be used to control the level of zooming. In the case of a HMD, the speed of the head rotation may serve as a measure for the level of zoom. This way, a zoom-in may be provided when the user has a lower rotational velocity, and a zoom-out may be provided when the rotational velocity is higher.

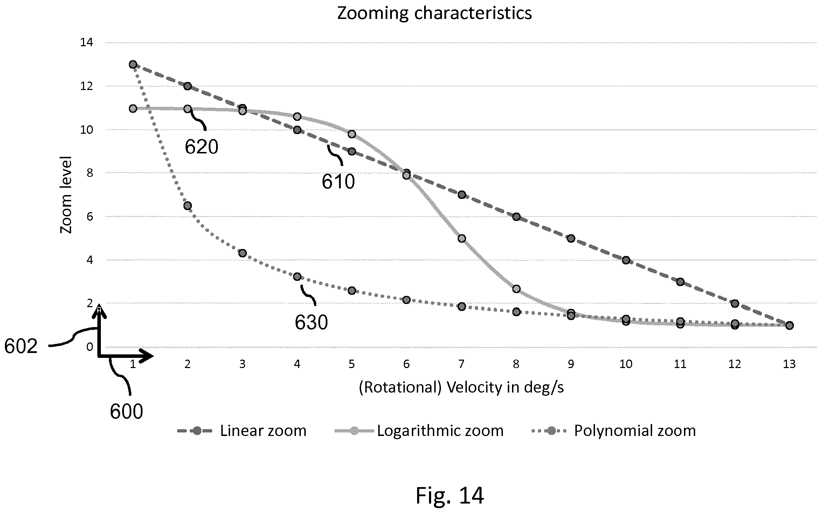

Fig. 14 shows different control functions 610-630, which each translate a given rotational velocity, which is set out on the horizontal axis 600 in deg/s, into a zoom level, which is set out on the vertical axis 602. The dashed line 610 represents linear zoom, where the zoom level is directly inverse-proportional to the rotational velocity. In this example, rotating the head 1 deg/s faster results in a decrease in the magnification level by 1. The solid line 620 resembles a logarithmic / sigmoidal control function, which results in a zoom transition which can be more fluid than the linear control function 610. In this particular function, the zoom level will not change much until the user reaches a rotational velocity above 5 deg/s, after which it will change fast until about 9 deg/s, and then will change slowly from that point. The dotted line 630 resembles a polynomial control function, resulting in an initial fast decline with little rotational velocity, which is reduced for higher levels of rotational velocity.

Depending on the intended usage scenario, different control functions may be used. For example, while Fig. 14 shows the control functions in the range [0, 13], in other embodiments the control functions may be defined in the range of $(0, \infty)$ or be defined to have a particular upper bound b, e.g., (0, b], etc. Also, there may be a lower bound for the zoom level, for example in Fig. 14 a lower bound of 1 (no zoom) may be applied for the range (13, infinite) or the zoom may be effectively switched off.

### Zoom by sphere deformation

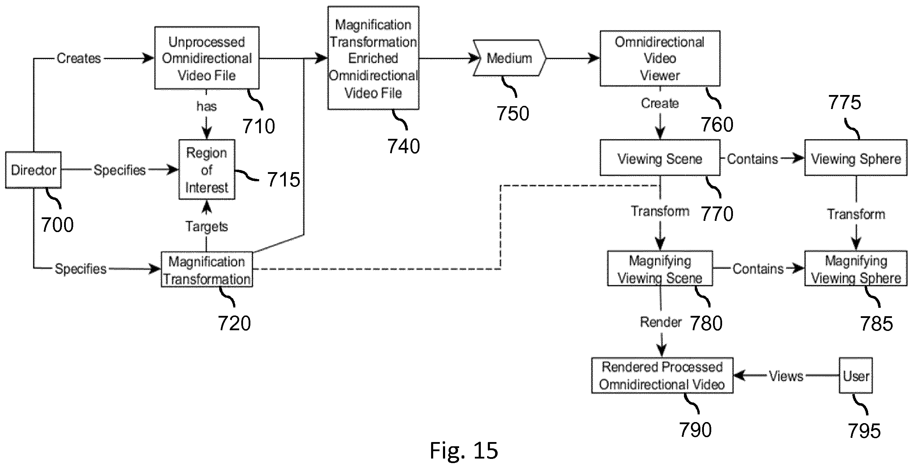

In an embodiment described with reference to Fig. 15, a director 700 may have created an omnidirectional video, e.g., with a resolution of 16K, and encoded said video, e.g., using VP9, while encoding the audio, e.g., using the so-termed Opus codec. Both the encoded video and audio may be packaged in a WebM container. In the resulting omnidirectional video file 710, the director may identify a region of interest 715, and may decide to draw the attention of users, e.g., the viewers of the video, by magnifying this region. For this purpose, the director 700 may decide to employ a magnification transformation 720 by which the original video image is stretched in a spherical manner, e.g., such that the center of the region of interest 715 is magnified four times, with the magnification linearly decreasing towards the edges of the region of interest 715. For example, the radius of the apparent magnification sphere may be defined as 10 spherical degrees. As such, the director may decide to insert the following JSON metadata into each frame of the video, e.g., using an authoring tool:

```
1 {
2 shape: {
3 type: 'sphere',
4 angle: 10
5 },
6 location: {
7 phi: 0,
8 theta: 10
9 }
10 }
```

This may result in a so-termed 'magnification transformation enriched' omnidirectional video file 740, which may be transferred to a rendering system of a user via a medium 750. For example, the user may download the video file 740 from a website, and then use an Omnidirectional Video Viewer 760 (OVV) to play the file. Based on metadata contained in the video file, the OVV 760 may start building a viewing environment 770, termed here 'viewing scene', which may contain a virtual body 775 onto which the video may be projected, termed here 'viewing sphere'. For example, the OVV 760 may first generate a regular sphere mesh, e.g., by dividing the longitude in 40 equally-sized partitions, and likewise for the latitude. As a result, a sphere mesh may be obtained which may comprise 1600 vertices. During playback, the OVV 760 may encounter the director's metadata, and modify the geometry of the sphere mesh 775 to realize the requested deformation, for example as follows.

In the following, it is assumed that the viewing position of the user, e.g., represented by a virtual camera in the viewing scene 770, 780, is at the point (0,0,0) in 3D-space. The deformation may be applied to all vertices which satisfy the following property: the distance of a vertex to the center of the magnification location (e.g. the location (0°,10°) in this embodiment) may span at most 10° of the field of view. In other words, consider the vertex $v_c$ which is the vector at the center of the magnification location. An arbitrary vertex $v_i$ will then be transformed if and only if:

$$\cos^{-1} \frac{v_c \cdot v_i}{|v_c||v_i|} < 10°$$

For each selected vertex $v_i$, the transformed vertex $v_i'$ may be obtained as follows: first, the difference vector $d_i = v_i\text{-}v_c$ may be defined. The radius of the magnification sphere S centered on point $v_c$ may be equal to:

$$r = |d_c| \tan \frac{10°}{2}$$

The resulting equation for the magnification sphere (in 3D-space):

$$S(x,y,z,r) = \left(x - v_{c,x}\right)^2 + \left(y - v_{c,y}\right)^2 + \left(z - v_{c,z}\right)^2 - r^2$$

Next, consider line equation $L = \lambda \cdot v_i'$ which describes the line through the user location and $v_i'$. The solution set *SOL* may be obtained by solving the equation $S(v_i', r) = 0$, e.g., the intersection of line *L* with sphere S. The set *SOL* may have either one or two elements, given that all vertices not in range of the sphere were filtered out beforehand. Therefore, the line intersects *S* at least one time, and at most two times.

Following the calculation of *SOL,* the vector $v_i'$ may be obtained using:

$$v_i' = \min\{|v|, \text{where } v \in SOL\}$$

After the vertices have been displaced, e.g., without modification of the UV coordinates, a magnifying video sphere 785 may be obtained. The current video frame may be selected as the texture for the magnifying video sphere 785. Next, the OVV 760 may send the viewing scene 780 to the rendering pipeline of the rendering system, and the scene may be rendered as usual, resulting in a rendered processed omnidirectional video 790 which may be displayed to the user 795.

The result may be that the region of interest may appear as if it has been zoomed-in since it is closer to the user's location in the virtual environment. It will be appreciated that this technique is applicable to both monoscopic (e.g. a television screen) and stereoscopic viewing (e.g. a VR-headset). In the latter case, because the mesh of the viewing sphere has been adjusted, the stereoscopic images seen by the user may be different for each eye. This may create a 3D-effect, which may allow the user to look to the sides of the zoomed area. This 3D effect may also be used for theatrical reasons. For example, when zooming in on a rectangular object, a rectangular displacement may be used to enhance the depth perception of said object.

**Zoom by image data processing**

The following embodiment is described with reference to Fig. 16 and assumes a similar context as the Fig. 15 embodiment. Namely, a director 700 may have created an omnidirectional video, e.g., with the following properties: a resolution of 16K, with the spherical images being encoded using an equirectangular projection, with the video stream being encoded using VP9, with the audio stream being encoded with the Opus codec, and the media streams being packaged in a WebM container.

In the omnidirectional video 710, the director 700 may identify a region of interest 715, and decide to draw the attention viewers by magnifying this region. For this purpose, the director may decide to use a transformation 720 where the original image is stretched such that the center of the region of interest is magnified four times, where the magnification linearly decreases towards the edges. The size of the apparent magnification sphere may be defined as 10 (spherical) degrees.

Next, the director 700 may provide the unprocessed omnidirectional video file 710 to a magnification transformation applicator (MTA) 730 program, which may apply the magnification transformation 720 to the omnidirectional video by processing its image data. In a specific example, the 'FFmpeg' program may be used, which may be configured to use a magnification transformation filter which applies the following magnification transformation 720 to the image data of each video frame.

In the following, Tait-Bryan angles (e.g. Pitch and Yaw) are used, where yaw ($\varphi$) denotes a rotation in the xy-plane, and pitch a rotation in the z-plane.

The magnification transformation may be defined by projection functions which project from Tait-Bryan angles to a point on a unit sphere, and vice versa:

$$p(\varphi, \theta) = \begin{pmatrix} x \\ y \\ z \end{pmatrix} = \begin{pmatrix} \cos\theta\cos\varphi \\ \cos\theta\sin\varphi \\ \sin\theta \end{pmatrix}$$

$$p^{-1}(x, y, z) = \begin{pmatrix} \varphi \\ \theta \end{pmatrix} = \begin{pmatrix} \tan^{-1}\dfrac{y}{x} \\ \sin^{-1}\dfrac{z}{\sqrt{x^2 + y^2 + z^2}} \end{pmatrix}$$

The equirectangular projection function, and its inverse, may be defined as follows:

$$\tau(\varphi, \theta) = \begin{pmatrix} x \\ y \end{pmatrix} = \begin{pmatrix} \dfrac{\varphi}{2\pi} \\ \dfrac{\theta}{\pi} + \dfrac{1}{2} \end{pmatrix}$$

$$\tau^{-1}(x, y) = \begin{pmatrix} \varphi \\ \theta \end{pmatrix} = \begin{pmatrix} 2\pi x \\ \pi \cdot \left(y - \dfrac{1}{2}\right) \end{pmatrix}$$

Before defining the transformation function, $v_p'$ may be defined as the following shorthand:

$$v_p' = p\big(\tau^{-1}(v_p)\big)$$

Next, the transformation function may be defined as follows:

$$\mathrm{mt}(v_p, \varphi, \theta, r, m) = \begin{cases} \mathrm{mt}'(v_p, \varphi, \theta, r, m) & \text{if } \cos^{-1}\dfrac{v_p' \cdot p(\varphi, \theta)}{|v_p'||\mathrm{p}(\varphi, \theta)|} < 10° \\ v_p & \text{otherwise} \end{cases}$$

with $v_p$ being a two-dimensional vector representing a coordinate-pair on the original video image, the variables $\varphi$, $\theta$ the location of the magnification object in spherical coordinates, $r$ the size of the magnification sphere in spherical degrees and $m$ the magnification factor.

The actual transformation function mt' may be performed as follows:

- Calculate $v_c = p(\varphi, \theta)$

- **Next, calculate** the cross-product $A = v_c \times v_p'$

- Determine $\alpha$, the angle between $v_c$ and $v_p'$, using the dot-product:

$$\alpha = \cos^{-1}\frac{v_p' \cdot p(\varphi,\theta)}{|v_p'||\mathrm{p}(\varphi,\theta)|}$$

- Rotate $v_p'$ over axis A by $\alpha(m-1)$, such that the new angle between $v_c$ and $v_p'$ becomes $\alpha \cdot m$. This way, $v_{p,r}'$ may be

obtained.

- Next, calculate $\mathrm{mt}'\left(v_p, \varphi, \theta, r, m\right) = v_{p,r} = \tau\left(p^{-1}\left(v'_{p,r}\right)\right)$.
- Discard the result of mt' if its end result overlaps with already occupied image data (e.g. the end-result falls outside the magnification area).

Note that the above defines mt: $\mathbb{R}^2 \to \mathbb{R}^2$, whereas within digital images, calculations are normally performed in $\mathbb{N}^2$. Therefore, the MTA program 730 may apply an interpolation filter (for example: bilinear, trilinear or anisotropic interpolation) in order to fill any 'gaps' resulting from the discrete application of this transformation. Given that the transformation function is defined over $\mathbb{R}^2$, this may provide an arbitrary level of detail for said filters. Note that this embodiment demonstrates only one example of a transformation function. Any function $f\colon \mathbb{R}^2 \to \mathbb{R}^2$ may suffice in this regard.

After application of the MTA program 730, the director may have obtained a processed omnidirectional video file 742 which comprises the zoomed region 745. The processed omnidirectional video file 742 may now be distributed to a rendering system of a user 795, e.g., via a medium 750 such as the internet. The play-out of such a video file may then be conventional, e.g., using an Omnidirectional Video Viewer (OVV) program 762. Namely, given that the magnification transformation 720 has already been applied to the unprocessed omnidirectional video image data, e.g., is 'hardcoded' therein, the processed omnidirectional video file 742 may be indistinguishable from a regular unprocessed omnidirectional video from the perspective of the OVV 762. As a result, the OVV 762 may play-out said video without additional configuration.

In general, the transformation mt 720 is not limited for application by the director. For example, the magnification transformation 720 may also be applied:

- At the source of the video (e.g. as in the previous embodiment).
- In a (cloud) network.
- By the edge of the network (e.g. close to the end-user's system).
- By the rendering device of the end-user.
- By the HMD of the end-user.

A transformation may be specified at multiple different locations in the process, e.g., by the end-user, by the party providing the video (e.g. in a streaming situation) or by a third party (system). Examples of the latter include:

- A system configured to synchronize the experience between multiple end-users.
- In a streaming situation with multiple audio / video streams (e.g. conferencing / news / commentator) where one of the stream sources dictates the zoom properties for the other stream.
- In a conferences system for a large-scale conference, showing in zoom the person who speaks or the person a viewer is currently looking at.

**Mesh-based zoom**

The following embodiment assumes a similar context as previously described with the Fig. 15 and Fig. 16 embodiments. Namely, a director 700 may have created an omnidirectional video, e.g., with the following properties: a resolution of 16K, with the spherical images being encoded using an equirectangular projection, with the video stream being encoded using VP9, with the audio stream being encoded with the Opus codec, and the media streams being packaged in a WebM container

A user may receive the WebM container file, e.g., via the Internet, and use an Omnidirectional Video Viewer (OVV) to play the file. The OVV may generate a virtual environment in which a virtual camera, representing the user's point of view, is placed at the origin of the 3D-space. In the virtual environment, a (hollow) sphere with radius r may be placed at the origin, e.g., with the vertices being placed at every 5° of longitude and latitude. The UV coordinates may be specified such that the resulting texture map performs an inverse equirectangular projection on an input texture.

The OVV may use a decoder to obtain the video and audio from the WebM container. The audio may be decoded and played-out in a conventional manner. The video may be decoded as well. Each time a new frame of the video is to be played-out, the OVV may use the decoded frame as a texture of the surrounding sphere. The user may view the video, e.g., using a head-mounted display (HMD), which allows him/her to look around inside the sphere, resulting in a 360° view of the omnidirectional video.

In such and similar contexts, the user may desire to zoom the video. In this embodiment, the OVV may implement zooming functionality as follows. Here, a disc-shaped zoom is provided, similar to Fig. 9. Alternatively, any other shape may be used.

- A disc may be created as a mesh object, with radius $\frac{r}{4}$. The disc may be placed such that it is in the middle of the field of view halfway between the camera location and the surrounding sphere, e.g., the sphere may be positioned at distance $\frac{r}{2}$ in the viewing direction).

Initially, and when the user moves the camera:

- The disc may be rotated such that its normal points towards the origin, e.g., it may be oriented towards the user.
- The position of the disc may be updated such that it remains in the center of the field of view.
- The texture map of the vertices of the disc may be updated based on the new camera orientation, such that a smaller portion of the video image is shown on a larger area, e.g., the video image is stretched.
- If an overlap occurs as the texture seams of the video are reached, additional (e.g., up to 4) textures are rendered, such that the disc remains completely textured.

The resulting scene may be rendered and displayed to the user.

**Projection-based zoom**

Zooming may be implemented by adjusting the projection of the image data onto the virtual body. In the following embodiment, UV coordinates of the virtual body, on which an omnidirectional video is rendered, are displaced. As each vertex of a 3D mesh may have only a single UV-coordinate pair, the applicability/accuracy of this method may be restricted by the amount of vertices of the virtual body.

A UV-map may be generated for the virtual body, being here a sphere, e.g., a 'viewing sphere', with radius 1. A vertex $(v_x, v_y, v_z)$ on that sphere may be mapped to the following UV coordinate:

$$(u,v) = \begin{cases} \left(\frac{1}{4} + \frac{v_x}{4}, \frac{1}{4} + \frac{v_y}{4}\right) & \text{if } v_z \geq 0 \\ \left(\frac{3}{4} + \frac{v_x}{4}, \frac{3}{4} + \frac{v_y}{4}\right) & \text{if } v_z < 0 \end{cases}$$

In other words, in this example, the sphere may be split into two halves. The top hemisphere may be projected orthogonally along the z-axis onto the left half of the UV-space, whereas the bottom hemisphere may be projected orthogonally along the z-axis onto the right half of the UV-space.

Given the zooming object, it may be determined which vertices are to be displaced. The zooming object definition may comprise the following properties:

- A magnification location in angular coordinates $(\varphi, \theta)$. In this example, the location $(0°, 10°)$ may be used.
- A magnification angle $\rho$, which defines the maximum allowed relative angle between two vectors pointing from the center of the sphere towards two points on the magnification area. In this example, a value of $\rho = 16°$ may be used.
- A magnification level $M$, referring to the amount of zoom at the center of the magnification area. In this example, the value $M = 2$ may be used.

The center of the magnification location $v_c$ may be defined as follows:

$$v_c = v_s(\varphi, \theta) = \begin{pmatrix} x \\ y \\ z \end{pmatrix} = \begin{pmatrix} \cos\theta\cos\varphi \\ \cos\theta\sin\varphi \\ \sin\theta \end{pmatrix}$$

$$v_c = v_s(0°, 10°) = \begin{pmatrix} 0.98 \\ 0 \\ 0.17 \end{pmatrix}$$

The distance of a vertex to the center of the magnification location (e.g. the location $(0°, 10°)$ in this embodiment) should span at most 16° of the viewing sphere. In other words, an arbitrary vertex $v_i$ may be transformed if and only if its relative angle to $v_c$ is smaller than 16°:

$$\cos^{-1}\frac{v_c \cdot v_i}{|v_c||v_i|} < 16°$$

A new virtual position of each vertex may be calculated with respect to the center taking into account the magnification factor. Given the magnification level M, for each vertex $v_z$ selected in the previous step, the vertex $v_z'$ may be calculated and normalized. This vertex $v_z'$ may be used as an image to calculate the new UV coordinates for $v_c$, used to achieve the magnification effect:

$$v_z' = \frac{v_c + v_z \cdot (M-1)}{|v_c + v_z \cdot (M-1)|}$$

For the selected magnification level, this becomes:

$$v_z' = \frac{v_c + v_z}{|v_c + v_z|}$$

This vertex $v_z' = (v_{z,x}', v_{z,y}', v_{z,z}')$ may be used to calculate the new UV coordinates $(u', v')$ using the first formula of this example:

$$(u', v') = \begin{cases} \left(\dfrac{1}{4} + \dfrac{v_{z,x}'}{4}, \dfrac{1}{4} + \dfrac{v_{z,y}'}{4}\right) & \text{if } v_{z,z}' \geq 0 \\[2ex] \left(\dfrac{3}{4} + \dfrac{v_{z,x}'}{4}, \dfrac{3}{4} + \dfrac{v_{z,y}'}{4}\right) & \text{if } v_{z,z}' < 0 \end{cases}$$

Finally, the new UV coordinates (u', v') may be assigned to the original. It will be appreciated that this operation, as well as all aforementioned calculations, may be performed in the vertex shader, e.g., of a Graphics Processing Unit (GPU).

**Other aspects**

The techniques described in this specification may be used to provide multiple zoomed portions, e.g., a partitioning, which may have different zoom levels.

The zoom level, e.g., the magnification ratio defined by $\frac{\text{magnified size}}{\text{original size}}$, may be expressed by any value in the range $(0, \infty) \in \mathbb{R}$.

The techniques described in this specification are also applicable to live (adaptive) streaming, where one or more layers of a 360° video content are being transmitted as soon as they are captured.

The location of the magnification object may be static with respect to the field of view of the user, e.g., in the center of the view, thereby drawing the attention of the user, or in another location, e.g., allowing the user to look straight past the magnification object. However, the object's location may also be dynamic with respect to the field of view of the user. For example, the location may be controlled by the director, e.g., by providing signaling over a network interface, or by providing signaling in the media file. The location may also be controlled by the user, e.g., by using VR motion (tracking) controllers, or by using gaze detection to detect the user's gaze and establishing the location of the magnification object to slowly follow the user's gaze.

The zooming configuration, e.g., the zoom level or the size of the zoomed region, may be purposefully restricted to reduce expected levels of nausea by ensuring that the user is always able to have a frame of reference with respect to the video, e.g., by ensuring that a fraction of the view always contains non-zoomed content.

The magnification level may be dynamically controlled, e.g., by the director or by user, e.g., using VR motion (tracking) controllers or by (gradually) adapting the zooming level when the user gazes at the magnification object and (gradually) resetting the zooming level when the user looks elsewhere. The zooming level may also be controlled based on where in the magnification object the user's gaze is pointed at, e.g., 1x magnification at the edges, 10x magnification in the center, with an easing function, e.g., using the examples shown in [4] to provide fluid interpolation.

The magnification object may have different shapes. Depending on what is desired by the director or user, the magnification object may take the shape of, e.g., a rounded rectangle, torus, a teapot, and convex and/or concave meshes. In this respect, it is noted that the shape of the magnification object does not have to be defined as a three-dimensional object but may also rather have a two-dimensional shape.

Instead of magnifying the part of the video directly below a virtual lens or other type of magnification object, a different part of the video may also be magnified instead, resulting in a potentially non-Euclidian viewing experience. Another comparison is that of a Heads-Up-Display or floating user interface, providing a specific view on the video. Multiple zoomed views may be provided at the same time. When the user is looking away from the current point-of-interest, a virtual lens may be used to simultaneously show the current view and the point-of-interest.

By using tiled streaming to provide high-resolution tiles, the required bandwidth for providing the magnified content can be greatly reduced. By matching the part of the 360° video currently magnified, e.g. by inverse projection, it may be detected which tiles of the high-resolution content match this part of the 360° video. The rendering system may only fetch those tiles required to render the magnified part.

The director may influence, e.g., by signaling, whether magnification is enabled, whether multiple magnification objects are used, adjust the magnification level, adjust the location of the magnification, adjust the shape of the magnification, and change the shape of the distortions introduced by the magnification object.

In general, the tracking of physical objects in the physical real-life environment may be used to determine the location of a magnification lens.

In general, the user may manipulate the shape and zoom-level of the magnification object using gestures, e.g., as may be detected by gesture detection, or using controllers including but not limited a keyboard, mouse, 6-DOF tracking controllers such as a WiiMote, a HTC Vive controller, a Oculus Rift controller, etc.

The omnidirectional image or video may be obtained in real-time by a camera worn by the user, e.g., comprised in or mounted to a HMD. As such, the image data may represent the user's current physical real-world environment.

The magnification may be performed by the server of the content, e.g., the sender system, instead of by the client, e.g., the rendering system. Some of the complexity of the client implementation may thereby be moved to the server implementation. In an embodiment, the server may render a regular equirectangular 360° video, which includes a magnified part. The client may then simply use the regular 360° video rendering method to display the video comprising the magnified part. Server-side rendering may be used, where all 3D graphics are rendered by the server.

The zooming functionality described in this specification, or a subset thereof, may be provided in the form of an extension to MPEG-OMAF. The HTTP adaptive streaming standard MPEG-DASH supports the definition of additional properties for signaling, and may be used to establish any of the signalling described in this specification. The magnification object may also be established by a plugin for a VR or gaming environment, such as but not limited to A-frame, Unity or Unreal Engine.

The zooming, when invoked, may be introduced gradually ever time, e.g., by animation rather than in a binary manner. For example, the zoomed-in view may be established over the course of several tens or hundreds of milliseconds or even seconds. Such animation may also be used when disabling the zooming.

Although reference is frequently made to providing a zoomed-in view, the measures described in this specification may also be used to provide a zoomed-out view. For example, in an omnidirectional video filmed from a car, zooming out may allow the user to view what is happening behind the car. The car in this example can be essentially replaced by any moving object (e.g. a plane, bicycle, stone, rocket, bullet, ant...). Another example is that a user may be watching an omnidirectional movie of a whale basin. Slowly, the whale moves in front of the camera, obscuring most of the view. The user may zoom out to improve his/her view of the surroundings, and to be able to observe the whole animal. Yet another example is that the user may watch a reenactment of a historical battle. The viewpoint is set on a hill such that both armies can be viewed at the same time. Before both armies charge towards each other, the director decides to zoom out in the center of the view, and zoom in on both sides of the view, where the center of the view allows viewing the complete battlefield, whereas the sides of the view now focus on the front unit of each army.

It is noted that any of the methods described in this specification, for example in any of the claims, may be implemented on a computer as a computer implemented method, as dedicated hardware, or as a combination of both. Instructions for the computer, e.g., executable code, may be stored on a computer readable medium, e.g., in the form of a series of machine readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc.

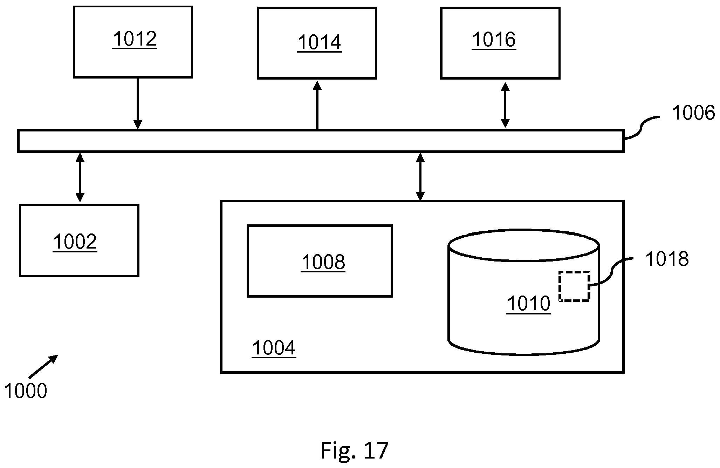

Fig. 17 is a block diagram illustrating an exemplary data processing system that may be used in the embodiments described in this specification. Such data processing systems include data processing entities described in this specification, including but not limited to the sender system and the rendering system.

The data processing system 1000 may include at least one processor 1002 coupled to memory elements 1004 through a system bus 1006. As such, the data processing system may store program code within memory elements 1004. Further, processor 1002 may execute the program code accessed from memory elements 1004 via system bus 1006. In one aspect, data processing system may be implemented as a computer that is suitable for storing and/or executing program code. It should be appreciated, however, that data processing system 1000 may be implemented in the form of any system including a processor and memory that is capable of performing the functions described within this specification.

Memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive, solid state disk or other persistent data storage device. The processing system 1000 may also include one or more cache memories (not shown) that provide temporary storage of at least some program code in order to reduce the number of times program code must be retrieved from bulk storage device 1010 during execution.

Input/output (I/O) devices depicted as input device 1012 and output device 1014 optionally can be coupled to the data processing system. Examples of input devices may include, but are not limited to, for example, a microphone, a keyboard, a pointing device such as a mouse, a game controller, a Bluetooth controller, a VR controller, and a gesture based input device, or the like. Examples of output devices may include, but are not limited to, for example, a monitor or display, speakers, or the like. Input device and/or output device may be coupled to data processing system either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system 1000.

As shown in Fig. 17, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail.

In one aspect, for example, data processing system 1000 may represent the sender system. In that case, application 1018 may represent an application that, when executed, configures data processing system 1000 to perform the functions described herein with reference to the sender system. In another aspect, data processing system 1000 may represent the rendering system. In that case, application 1018 may represent an application that, when executed, configures data processing system 1000 to perform the functions described herein with reference to the rendering system.

**References**

[1] "MPEG-DASH / Media Source demo," 27 August 2012. [Online]. Available: http://yt-dash-mse-test.commonda tastorage.googleapis.com/media/car-20120827-manifest.mpd. [Accessed June 2017].
[2] MPEG, "Dash-Industry-Forum/dash.js: A reference client implementation for the playback of MPEG DASH via Javascript and compliant browsers.," 20 June 2017. [Online]. Available: https://github.com/Dash-Industry-Forum/ dash.js. [Accessed 20 June 2017].
[3] "A-Frame - Make WebVR," 10 February 2017. [Online]. Available: https://aframe.io/. [Accessed June 2017].
[4] A. Sitnik, "Easing Functions Cheat Sheet," 9 June 2017. [Online]. Available: http://easings.net/. [Accessed June 2017].

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1.  A method of zooming an omnidirectional video which is represented by image data and which is viewable in virtual or augmented reality on the basis of the image data being i) projected onto a virtual body in a virtual environment and ii) rendered from a viewpoint within or facing the virtual body, thereby obtaining a rendered image for display, the method comprising:

    - obtaining user input comprising obtaining a measurement from a head-tracking system which is indicative of a translational and/or rotational movement of a head of a user;
    - determining a region to be zoomed in the omnidirectional video;
    - selecting the region to be zoomed, or adjusting a parameter of said zooming, based on the user input; and
    - providing in the rendered image:

    a zoomed portion which provides a zoomed view of the region, wherein the size of the zoomed portion is inversely proportional to the amount of head movement or acceleration of head movement of the user, and simultaneously with the zoomed portion, a non-zoomed portion which provides a default non-zoomed view or a view having a lower zoom factor than the zoomed view of the zoomed portion, wherein the zoomed portion is a center portion of the rendered image, and wherein the non-zoomed portion is a periphery of the center portion in the rendered image.

2.  The method according to claim 1, wherein providing the zoomed view of the region comprises processing the image data before the image data is projected onto the virtual body, or adjusting said projection of the image data, to establish the zoomed view of the region on a surface of the virtual body.

3.  The method according to claim 1, wherein providing the zoomed view of the region comprises deforming or adapting the virtual body to position a part of the virtual body closer to or further away from the viewpoint.

4.  The method according to claim 3, wherein said deforming comprises indenting a surface of the virtual body towards or away from the viewpoint.

5.  The method according to claim 1, wherein providing the zoomed view of the region comprises redirecting light in the virtual environment to establish the zoomed view of the region during the rendering.

6.  The method according to claim 5, wherein the redirecting of light comprises providing a light redirecting object in the virtual environment, such as a lens.

7.  The method according to any one of the above claims, wherein obtaining the user input comprises detecting a gaze of a user to identify a gaze point of the user with respect the rendered image.

8.  The method according to any one of the above claims, wherein the image data is obtained by layered video comprising a base layer and a zoom layer, wherein providing the zoomed portion of the rendered image comprises selecting image data from the zoom layer and wherein providing the non-zoomed portion comprises selecting image data from the base layer.

9.  A transitory or non-transitory computer-readable medium comprising a computer program, the computer program comprising instructions for causing a processor system to perform the method according to any one of claims 1 to 8.

10. A rendering system (200) configured for rendering a virtual environment for virtual or augmented reality, wherein the rendering system comprises:

    - an image data interface (210) for obtaining image data representing an omnidirectional video;
    - a processor (220) configured to enable viewing of the omnidirectional video in the virtual environment by i) projecting the image data onto a virtual body and ii) rendering the virtual environment from a viewpoint within or facing the virtual body, thereby obtaining a rendered image; and
    - a display interface (230) for providing the rendered image to a display;

    wherein the processor is further configured to:

- obtain user input comprising obtaining a measurement from a head-tracking system which is indicative of a translational and/or rotational movement of a head of a user (250);
- determine a region to be zoomed in the omnidirectional video;
- select the region to be zoomed, or adjust a parameter of said zooming, based on the user input; and
- provide in the rendered image:

a zoomed portion which provides a zoomed view of the region, wherein the size of the zoomed portion is inversely proportional to the amount of head movement or acceleration of head movement of the user, and simultaneously with the zoomed portion, a non-zoomed portion which provides a default non-zoomed view or a view having a lower zoom factor than the zoomed view of the zoomed portion, wherein the zoomed portion is a center portion of the rendered image, and wherein the non-zoomed portion is a periphery of the center portion in the rendered image.

11. The rendering system according claim 10, wherein the image data interface is a network interface configured for receiving the image data via a network from a sender system, and wherein the processor is configured to provide the zoomed view of the region by signalling the sender system via a communication interface to process the image data so as to establish the zoomed view of the region in the image data before the image data is transmitted to the rendering system.

12. The rendering system according to claim 10 or 11, wherein the processor is configured to provide the zoomed view of the region by processing the image data before the image data is projected onto the virtual body, or adjusting said projection of the image data, to establish the zoomed view of the region on a surface of the virtual body.

13. The rendering system according to claim 10 or 11, wherein the processor is configured to provide the zoomed view of the region by deforming or adapting the virtual body to position a part of the virtual body closer to or further away from the viewpoint.

14. The rendering system according to claim 10 or 11, wherein the processor is configured to provide the zoomed view of the region by redirecting light in the virtual environment to establish the zoomed view of the region during the rendering.

15. The rendering system according to any one of claims 10-14, wherein the image data is obtained by layered video comprising a base layer and a zoom layer, wherein the processor is configured to provide the zoomed portion of the rendered image by selecting image data from the zoom layer and to provide the non-zoomed portion by selecting image data from the base layer.

16. A sender system (100) for providing image data (112) of an omnidirectional video to a rendering system (200) which is configured to enable viewing of the omnidirectional video in virtual or augmented reality by i) projecting the image data in a virtual environment onto a virtual body and ii) rendering the virtual environment from a viewpoint within or facing the virtual body, thereby obtaining a rendered image, wherein the sender system comprises:

- a network interface (110) for transmitting the image data via a network (150) to the rendering system; and
- a processor (120) configured to:

- obtain user input comprising obtaining a measurement from a head-tracking system which is indicative of a translational and/or rotational movement of a head of a user (250);
- determine a region to be zoomed in the omnidirectional video;
- select the region to be zoomed, or adjust a parameter of said zooming, based on the user input, wherein the size of the zoomed region is inversely proportional to the amount of head movement or acceleration of head movement of the user; and
- enable zooming of the omnidirectional video within the virtual environment by:

- using the network interface, signalling the rendering system to provide a zoomed view of the region in the rendered image, thereby providing a zoomed portion and a non-zoomed portion of the rendered image, wherein the non-zoomed portion provides a default non-zoomed view or a view having a lower zoom factor than the zoomed view of the zoomed portion, and wherein the zoomed portion is a center portion of the rendered image, and wherein the non-zoomed portion is a periphery of the center portion in the rendered image; or

- processing the image data to establish the zoomed view of the region in the image data before the image data is transmitted to the rendering system, thereby providing a zoomed portion and a non-zoomed portion of the image data, wherein the non-zoomed portion provides a default non-zoomed view or a view having a lower zoom factor than the zoomed view of the zoomed portion, and wherein the zoomed portion is a center portion of the rendered image, and wherein the non-zoomed portion is a periphery of the center portion in the rendered image.

**Patentansprüche**

1. Ein Verfahren zum Zoomen eines omnidirektionalen Videos, das durch Bilddaten repräsentiert wird und das in virtueller oder erweiterter Realität sichtbar ist auf der Grundlage der Bilddaten, die i) auf einen virtuellen Körper in einer virtuellen Umgebung projiziert werden und ii) von einem innerhalb des virtuellen Körpers liegenden oder diesem zugewandten Standpunkt aus gerendert werden, wodurch ein gerendertes Bild zum Anzeigen erhalten wird, wobei das Verfahren aufweist:

   - Erhalten einer Benutzereingabe, aufweisend Erhalten einer Messung von einem Head-Tracking-System, die auf eine Translations- und/oder Rotationsbewegung eines Kopfes eines Benutzers hindeutet;
   - Ermitteln eines zu zoomenden Bereichs in dem omnidirektionalen Video;
   - Auswählen des zu zoomenden Bereichs oder Anpassen eines Parameters besagten Zoomens basierend auf der Benutzereingabe; und
   - Bereitstellen in dem gerenderten Bild:

      eines gezoomten Teilbereichs, der eine gezoomte Ansicht des Bereichs bereitstellt, wobei die Größe des gezoomten Teilbereichs umgekehrt proportional zum Ausmaß der Kopfbewegung oder Beschleunigung der Kopfbewegung des Benutzers ist, und,
      gleichzeitig mit dem gezoomten Teilbereich, eines nicht-gezoomten Teilbereichs, der eine standardmäßige nicht-gezoomte Ansicht oder eine Ansicht mit einem niedrigeren Zoomfaktor als die gezoomte Ansicht des gezoomten Teilbereichs bereitstellt, wobei der gezoomte Teilbereich ein zentraler Teilbereich des gerenderten Bildes ist, und wobei der nicht-gezoomte Teilbereich eine Peripherie des zentralen Teilbereichs in dem gerenderten Bild ist.

2. Das Verfahren gemäß Anspruch 1, wobei das Bereitstellen der gezoomten Ansicht des Bereichs aufweist: Verarbeiten der Bilddaten, bevor die Bilddaten auf den virtuellen Körper projiziert werden, oder Anpassen besagter Projektion der Bilddaten, um die gezoomte Ansicht des Bereichs auf einer Oberfläche des virtuellen Körpers zu erstellen.

3. Das Verfahren gemäß Anspruch 1, wobei das Bereitstellen der gezoomten Ansicht des Bereichs Verformen oder Anpassen des virtuellen Körpers, um einen Teil des virtuellen Körpers näher an dem Standpunkt oder weiter weg von diesem zu positionieren, aufweist.

4. Das Verfahren gemäß Anspruch 3, wobei besagtes Verformen Einziehen einer Oberfläche des virtuellen Körpers hin zu dem Standpunkt oder weg von diesem aufweist.

5. Das Verfahren gemäß Anspruch 1, wobei das Bereitstellen der gezoomten Ansicht des Bereichs Umlenken von Licht in der virtuellen Umgebung, um die gezoomte Ansicht des Bereichs während des Renderns zu erstellen, aufweist.

6. Das Verfahren gemäß Anspruch 5, wobei das Umlenken von Licht Bereitstellen eines lichtumlenkenden Objekts, wie beispielsweise eine Linse, in der virtuellen Umgebung aufweist.

7. Das Verfahren gemäß einem der obigen Ansprüche, wobei das Erhalten der Benutzereingabe Detektieren eines Blicks eines Benutzers, um einen Blickpunkt des Benutzers in Bezug auf das gerenderte Bild zu identifizieren, aufweist.

8. Das Verfahren gemäß einem der obigen Ansprüche, wobei die Bilddaten durch ein geschichtetes Video erhalten werden, das eine Basisschicht und eine Zoomschicht aufweist, wobei das Bereitstellen des gezoomten Teilbereichs des gerenderten Bildes Auswählen von Bilddaten aus der Zoomschicht aufweist, und wobei das Bereitstellen des nicht-gezoomten Teilbereichs Auswählen von Bilddaten aus der Basisschicht aufweist.

9. Ein transitorisches oder nicht-transitorisches computerlesbares Medium, das ein Computerprogramm aufweist, wobei das Computerprogramm Anweisungen aufweist, um ein Prozessorsystem zu veranlassen, das Verfahren gemäß einem der Ansprüche 1 bis 8 auszuführen.

10. Ein Rendering-System (200), das zum Rendern einer virtuellen Umgebung für virtuelle oder erweiterte Realität konfiguriert ist, wobei das Rendering-System aufweist:

- eine Bilddatenschnittstelle (210) zum Erhalten von Bilddaten, die ein omnidirektionales Video repräsentieren;
- einen Prozessor (220), der so konfiguriert ist, dass er das Betrachten des omnidirektionalen Videos in der virtuellen Umgebung ermöglicht, indem i) die Bilddaten auf einen virtuellen Körper projiziert werden und ii) die virtuelle Umgebung von einem innerhalb des virtuellen Körpers liegenden oder diesem zugewandten Standpunkt aus gerendert wird, wodurch ein gerendertes Bild erhalten wird; und
- eine Anzeigeschnittstelle (230) zum Bereitstellen des gerenderten Bildes an eine Anzeige;

wobei der Prozessor ferner konfiguriert ist, um:

- eine Benutzereingabe zu erhalten, aufweisend Erhalten einer Messung von einem Head-Tracking-System, die auf eine Translations- und/oder Rotationsbewegung eines Kopfes eines Benutzers (250) hindeutet;
- einen zu zoomenden Bereich in dem omnidirektionalen Video zu ermitteln;
- den zu zoomenden Bereich auszuwählen oder einen Parameter des besagten Zoomens anzupassen, basierend auf der Benutzereingabe; und
- in dem gerenderten Bild bereitzustellen:

einen gezoomten Teilbereich, der eine gezoomte Ansicht des Bereichs bereitstellt, wobei die Größe des gezoomten Teilbereichs umgekehrt proportional zum Ausmaß der Kopfbewegung oder Beschleunigung der Kopfbewegung des Benutzers ist, und,
gleichzeitig mit dem gezoomten Teilbereich, einen nicht-gezoomten Teilbereich, der eine standardmäßige nicht-gezoomte Ansicht oder eine Ansicht mit einem niedrigeren Zoomfaktor als die gezoomte Ansicht des gezoomten Teilbereichs bereitstellt, wobei der gezoomte Teilbereich ein zentraler Teilbereich des gerenderten Bildes ist, und wobei der nicht-gezoomte Teilbereich eine Peripherie des zentralen Bereichs in dem gerenderten Bild ist.

11. Das Rendering-System gemäß Anspruch 10, wobei die Bilddatenschnittstelle eine Netzwerkschnittstelle ist, die zum Empfangen der Bilddaten über ein Netzwerk von einem Sendersystem konfiguriert ist,
und wobei der Prozessor so konfiguriert ist, dass er die gezoomte Ansicht des Bereichs bereitstellt, indem er dem Sendersystem über eine Kommunikationsschnittstelle signalisiert, die Bilddaten zu verarbeiten, um die gezoomte Ansicht des Bereichs in den Bilddaten zu erstellen, bevor die Bilddaten an das Rendering-System übertragen werden.

12. Das Rendering-System gemäß Anspruch 10 oder 11, wobei der Prozessor so konfiguriert ist, dass er die gezoomte Ansicht des Bereichs bereitstellt, indem er die Bilddaten verarbeitet, bevor die Bilddaten auf den virtuellen Körper projiziert werden, oder indem er besagte Projektion der Bilddaten anpasst, um die gezoomte Ansicht des Bereichs auf einer Oberfläche des virtuellen Körpers zu erstellen.

13. Das Rendering-System gemäß Anspruch 10 oder 11, wobei der Prozessor so konfiguriert ist, dass er die gezoomte Ansicht des Bereichs bereitstellt, indem er den virtuellen Körper verformt oder anpasst, um einen Teil des virtuellen Körpers näher an dem Standpunkt oder weiter weg von diesem zu positionieren.

14. Das Rendering-System gemäß Anspruch 10 oder 11, wobei der Prozessor so konfiguriert ist, dass er die gezoomte Ansicht des Bereichs bereitstellt, indem er Licht in der virtuellen Umgebung umlenkt, um die gezoomte Ansicht des Bereichs während des Renderns zu erstellen.

15. Das Rendering-System gemäß einem der Ansprüche 10-14, wobei die Bilddaten durch ein geschichtetes Video erhalten werden, das eine Basisschicht und eine Zoomschicht aufweist, wobei der Prozessor so konfiguriert ist, dass er den gezoomten Teilbereich des gerenderten Bildes durch Auswählen von Bilddaten aus der Zoomschicht bereitstellt und den nicht-gezoomten Teilbereich durch Auswählen von Bilddaten aus der Basisschicht bereitstellt.

16. Ein Sendersystem (100) zum Bereitstellen von Bilddaten (112) eines omnidirektionalen Videos an ein Rendering-System (200), das so konfiguriert ist, dass es das Betrachten des omnidirektionalen Videos in virtueller oder erweiterter Realität ermöglicht, indem i) die Bilddaten in einer virtuellen Umgebung auf einen virtuellen Körper projiziert werden und ii) die virtuelle Umgebung von einem innerhalb des virtuellen Körpers liegenden oder diesem zugewandten Standpunkt aus gerendert wird, wodurch ein gerendertes Bild erhalten wird, wobei das Sendersystem aufweist:

- eine Netzwerkschnittstelle (110) zum Übertragen der Bilddaten über ein Netzwerk (150) an das Rendering-System; und
- einen Prozessor (120), der konfiguriert ist, um:

- eine Benutzereingabe zu erhalten, aufweisend Erhalten einer Messung von einem Head-Tracking-System, die auf eine Translations- und/oder Rotationsbewegung eines Kopfes eines Benutzers (250) hindeutet;
- einen zu zoomenden Bereich in dem omnidirektionalen Video zu ermitteln;
- den zu zoomenden Bereich auszuwählen oder einen Parameter besagten Zoomens anzupassen basierend auf der Benutzereingabe, wobei die Größe des gezoomten Bereichs umgekehrt proportional zum Ausmaß der Kopfbewegung oder Beschleunigung der Kopfbewegung des Benutzers ist; und
- das Zoomen des omnidirektionalen Videos innerhalb der virtuellen Umgebung zu aktivieren durch:

- Verwenden der Netzwerkschnittstelle, Signalisieren an das Rendering-System, eine gezoomte Ansicht des Bereichs in dem gerenderten Bild bereitzustellen, wodurch ein gezoomter Teilbereich und ein nicht-gezoomter Teilbereich des gerenderten Bildes bereitgestellt werden, wobei der nicht-gezoomte Teilbereich eine standardmäßige nicht-gezoomte Ansicht oder eine Ansicht mit einem niedrigeren Zoomfaktor als die gezoomte Ansicht des gezoomten Teilbereichs bereitstellt, und wobei der gezoomte Teilbereich ein zentraler Teilbereich des gerenderten Bildes ist, und wobei der nicht-gezoomte Teilbereich eine Peripherie des zentralen Teilbereichs in dem gerenderten Bild ist; oder
- Verarbeiten der Bilddaten, um die gezoomte Ansicht des Bereichs in den Bilddaten zu erstellen, bevor die Bilddaten an das Rendering-System übertragen werden, wodurch ein gezoomter Teilbereich und ein nicht-gezoomter Teilbereich der Bilddaten bereitgestellt werden, wobei der nicht-gezoomte Teilbereich eine standardmäßige nicht-gezoomte Ansicht oder eine Ansicht mit einem niedrigeren Zoomfaktor als die gezoomte Ansicht des gezoomten Teilbereichs bereitstellt, und wobei der gezoomte Teilbereich ein zentraler Teilbereich des gerenderten Bildes ist, und wobei der nicht-gezoomte Teilbereich eine Peripherie des zentralen Teilbereichs in dem gerenderten Bild ist.

**Revendications**

1. Procédé de zoom d'une vidéo omnidirectionnelle qui est représentée par des données d'image et qui peut être visualisée en réalité virtuelle ou augmentée sur la base des données d'image i) projetées sur un corps virtuel dans un environnement virtuel et ii) rendues à partir d'un point de vue à l'intérieur ou en face du corps virtuel, pour ainsi obtenir une image rendue à afficher, le procédé comprenant :

- l'obtention d'une entrée d'utilisateur comprenant l'obtention d'une mesure à partir d'un système de suivi de tête qui indique un mouvement de translation et/ou de rotation de la tête d'un utilisateur ;
- la détermination d'une région à zoomer dans la vidéo omnidirectionnelle ;
- la sélection de la région à zoomer ou l'ajustement d'un paramètre dudit zoom, sur la base de l'entrée d'utilisateur ; et
- la fourniture dans l'image rendue :

d'une partie zoomée qui fournit une vue zoomée de la région, dans lequel la taille de la partie zoomée est inversement proportionnelle à l'amplitude de mouvement de la tête ou à l'accélération du mouvement de la tête de l'utilisateur, et
simultanément avec la partie zoomée, d'une partie non zoomée qui fournit une vue non zoomée par défaut ou une vue ayant un facteur de zoom inférieur à la vue zoomée de la partie zoomée, dans lequel la partie zoomée est une partie centrale de l'image rendue, et dans lequel la partie non zoomée est une périphérie de la partie centrale dans l'image rendue.

2. Procédé selon la revendication 1, dans lequel la fourniture de la vue zoomée de la région comprend le traitement des données d'image avant que les données d'image ne soient projetées sur le corps virtuel ou l'ajustement de ladite projection des données d'image, pour établir la vue zoomée de la région sur une surface du corps virtuel.

3.  Procédé selon la revendication 1, dans lequel la fourniture de la vue zoomée de la région comprend la déformation ou l'adaptation du corps virtuel pour positionner une partie du corps virtuel plus près ou plus loin du point de vue.

4.  Procédé selon la revendication 3, dans lequel ladite déformation comprend l'enfoncement d'une surface du corps virtuel vers ou à l'opposé du point de vue.

5.  Procédé selon la revendication 1, dans lequel la fourniture de la vue zoomée de la région comprend la redirection de la lumière dans l'environnement virtuel pour établir la vue zoomée de la région pendant le rendu.

6.  Procédé selon la revendication 5, dans lequel la redirection de la lumière comprend la fourniture d'un objet de redirection de lumière dans l'environnement virtuel, tel qu'une lentille.

7.  Procédé selon l'une quelconque des revendications précédentes, dans lequel l'obtention de l'entrée d'utilisateur comprend la détection d'un regard d'un utilisateur pour identifier un point de regard de l'utilisateur par rapport à l'image rendue.

8.  Procédé selon l'une quelconque des revendications précédentes, dans lequel les données d'image sont obtenues par une vidéo en couches comprenant une couche de base et une couche de zoom, dans lequel la fourniture de la partie zoomée de l'image rendue comprend la sélection de données d'image à partir de la couche de zoom et dans lequel la fourniture de la partie non zoomée comprend la sélection de données d'image à partir de la couche de base.

9.  Support transitoire ou non transitoire lisible par ordinateur comprenant un programme informatique, le programme informatique comprenant des instructions pour amener un système de processeur à réaliser le procédé selon l'une quelconque des revendications 1 à 8.

10. Système de rendu (200) configuré pour rendre un environnement virtuel en réalité virtuelle ou augmentée, dans lequel le système de rendu comprend :

    - une interface de données d'image (210) pour obtenir des données d'image représentant une vidéo omnidirectionnelle ;
    - un processeur (220) configuré pour permettre la visualisation de la vidéo omnidirectionnelle dans l'environnement virtuel en i) projetant les données d'image sur un corps virtuel et ii) rendant l'environnement virtuel à partir d'un point de vue à l'intérieur ou en face du corps virtuel, pour ainsi obtenir une image rendue ; et
    - une interface d'affichage (230) pour fournir l'image rendue à un dispositif d'affichage : dans lequel le processeur est en outre configuré pour:

        - obtenir une entrée d'utilisateur comprenant l'obtention d'une mesure à partir d'un système de suivi de tête qui indique un mouvement de translation et/ou de rotation de la tête d'un utilisateur (250) ;
        - déterminer une région à zoomer dans la vidéo omnidirectionnelle ;
        - sélectionner la région à zoomer ou ajuster un paramètre dudit zoom, sur la base de l'entrée d'utilisateur ; et
        - fournir dans l'image rendue :

            une partie zoomée qui fournit une vue zoomée de la région, dans lequel la taille de la partie zoomée est inversement proportionnelle à l'amplitude de mouvement de la tête ou à l'accélération du mouvement de la tête de l'utilisateur, et
            simultanément avec la partie zoomée, une partie non zoomée qui fournit une vue non zoomée par défaut ou une vue ayant un facteur de zoom inférieur à la vue zoomée de la partie zoomée, dans lequel la partie zoomée est une partie centrale de l'image rendue, et dans lequel la partie non zoomée est une périphérie de la partie centrale dans l'image rendue.

11. Système de rendu selon la revendication 10, dans lequel l'interface de données d'image est une interface réseau configurée pour recevoir les données d'image via un réseau d'un système émetteur, et dans lequel le processeur est configuré pour fournir la vue zoomée de la région en signalant au système émetteur via une interface de communication de traiter les données d'image de façon à établir la vue zoomée de la région dans les données d'image avant que les données d'image ne soient transmises au système de rendu.

12. Système de rendu selon la revendication 10 ou 11, dans lequel le processeur est configuré pour fournir la vue zoomée de la région en traitant les données d'image avant que les données d'image ne soient projetées sur le corps virtuel ou en ajustant ladite projection des données d'image, pour établir la vue zoomée de la région sur une surface du corps virtuel.

13. Système de rendu selon la revendication 10 ou 11, dans lequel le processeur est configuré pour fournir la vue zoomée de la région en déformant ou en adaptant le corps virtuel pour positionner une partie du corps virtuel plus près ou plus loin du point de vue.

14. Système de rendu selon la revendication 10 ou 11, dans lequel le processeur est configuré pour fournir la vue zoomée de la région en redirigeant la lumière dans l'environnement virtuel pour établir la vue zoomée de la région pendant le rendu.

15. Système de rendu selon l'une quelconque des revendications 10 à 14, dans lequel les données d'image sont obtenues par une vidéo en couches comprenant une couche de base et une couche de zoom, dans lequel le processeur est configuré pour fournir la partie zoomée de l'image rendue en sélectionnant des données d'image à partir de la couche de zoom et pour fournir la partie non zoomée en sélectionnant des données d'image à partir de la couche de base.

16. Système émetteur (100) pour fournir des données d'image (112) d'une vidéo omnidirectionnelle à un système de rendu (200) qui est configuré pour permettre la visualisation de la vidéo omnidirectionnelle en réalité virtuelle ou augmentée en i) projetant les données d'image dans un environnement virtuel sur un corps virtuel et ii) rendant l'environnement virtuel à partir d'un point de vue à l'intérieur ou en face du corps virtuel, pour ainsi obtenir une image rendue, dans lequel le système émetteur comprend :

- une interface réseau (110) pour transmettre les données d'image via un réseau (150) au système de rendu ; et
- un processeur (120) configuré pour :

- obtenir une entrée d'utilisateur comprenant l'obtention d'une mesure à partir d'un système de suivi de tête qui indique un mouvement de translation et/ou de rotation de la tête d'un utilisateur (250) ;
- déterminer une région à zoomer dans la vidéo omnidirectionnelle ;
- sélectionner la région à zoomer ou ajuster un paramètre dudit zoom, sur la base de l'entrée d'utilisateur, dans lequel la taille de la région zoomée est inversement proportionnelle à l'amplitude de mouvement de la tête ou à l'accélération du mouvement de la tête de l'utilisateur ; et
- permettre le zoom de la vidéo omnidirectionnelle au sein de l'environnement virtuel en :

- utilisant l'interface réseau, signalant au système de rendu de fournir une vue zoomée de la région dans l'image rendue, pour ainsi fournir une partie zoomée et une partie non zoomée de l'image rendue, dans lequel la partie non zoomée fournit une vue non zoomée par défaut ou une vue ayant un facteur de zoom inférieur à la vue zoomée de la partie zoomée, et dans lequel la partie zoomée est une partie centrale de l'image rendue, et dans lequel la partie non zoomée est une périphérie de la partie centrale de l'image rendue ; ou
- traitant les données d'image pour établir la vue zoomée de la région dans les données d'image avant que les données d'image ne soient transmises au système de rendu, pour ainsi fournir une partie zoomée et une partie non zoomée des données d'image, dans lequel la partie non zoomée fournit une vue non zoomée par défaut ou une vue ayant un facteur de zoom inférieur à la vue zoomée de la partie zoomée, et dans lequel la partie zoomée est une partie centrale de l'image rendue, et dans lequel la partie non zoomée est une périphérie de la partie centrale dans l'image rendue.

250
240
232
200
212
150
112
114
100

Fig. 1

Fig. 2

Fig. 3

Fig. 4

Fig. 5

EP 3 676 794 B1

Fig. 7

Fig. 6

430

Fig. 9

420

Fig. 8

Fig. 11

450

Fig. 10

440

Fig. 12

Fig. 13

Zooming characteristics

Fig. 14

Fig. 15

Fig. 16

Fig. 17

EP 3 676 794 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **PORCINO et al.** Minimizing cyber sickness in head mounted display systems: design guidelines and applications. *IEEE 5th International Conference on Serious Games and Applications for Health*, 2017
- **HUIWEN CHANG et al.** Panning and Zooming High-Resolution Panoramas in Virtual Reality Devices. *Proceedings of the 30th Annual ACM Symposium on User Interface Software and Technology, UIST '17*, 21 August 2017, 279-288, https://qfx.cs.princeton.edu/pubs/Chanq 2017 PAZ/uist2017.pdf
- Acuity-Driven Gigapixel Visualization. **PAPADOPOULOS CHARILAOS et al.** IEEE Transactions on Visualization and Computer Graphics. IEEE Service Center, 01 December 2013, vol. 19, 2886-2895
- Capturing and viewing gigapixel images. **JOHANNES KOPF et al.** ACM Transactions On Graphics (TOG). ACM, 29 July 2007, vol. 26, 1-10
- *MPEG-DASH / Media Source demo*, 27 August 2012, http://yt-dash-mse-test.commondatastorage.googleapis.com/media/car-20120827-manifest.mpd.
- *Dash-Industry-Forum/dash.js: A reference client implementation for the playback of MPEG DASH via Javascript and compliant browsers.*, 20 June 2017, https://github.com/Dash-Industry-Forum/dash.js.
- *A-Frame - Make WebVR*, 10 February 2017, https://aframe.io/.
- **A. SITNIK**. *Easing Functions Cheat Sheet*, 09 June 2017, http://easings.net/.